(19) **Europäisches Patentamt**
**European Patent Office**
**Office européen des brevets**

(11) **EP 4 598 187 A1**

(12) **EUROPEAN PATENT APPLICATION**
published in accordance with Art. 153(4) EPC

(43) Date of publication:
06.08.2025 Bulletin 2025/32

(21) Application number: 23873286.1

(22) Date of filing: 04.10.2023

(51) International Patent Classification (IPC):
*H04W 72/04* (2023.01)   *H04W 72/23* (2023.01)
*H04W 72/53* (2023.01)   *H04L 5/14* (2006.01)
*H04L 5/00* (2006.01)

(52) Cooperative Patent Classification (CPC):
H04L 5/00; H04L 5/14; H04W 72/04; H04W 72/23;
H04W 72/53

(86) International application number:
PCT/KR2023/015166

(87) International publication number:
WO 2024/072179 (04.04.2024 Gazette 2024/14)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: 30.09.2022 KR 20220125160

(71) Applicant: **LG Electronics Inc.**
**Yeongdeungpo-gu**
**Seoul 07336 (KR)**

(72) Inventors:
• **SHIM, Jaenam**
**Seoul 06772 (KR)**
• **YOU, Hyangsun**
**Seoul 06772 (KR)**
• **KO, Hyunsoo**
**Seoul 06772 (KR)**

(74) Representative: **Plasseraud IP**
**104 Rue de Richelieu**
**CS92104**
**75080 Paris Cedex 02 (FR)**

(54) **SIGNAL TRANSMISSION/RECEPTION METHOD FOR WIRELESS COMMUNICATION, AND DEVICE THEREFOR**

(57)    In a wireless communication system according to various embodiments, a UE receives, from a base station, first configuration information for configuring a bandwidth part (BWP), receives, from the base station, an offset for configuring at least one sub-band within the BWP and second configuration information including information about the bandwidth size, and configures at least one sub-band on the basis of the second configuration information, wherein the at least one sub-band can be configured on the basis of a specific granularity determined according to the offset, the bandwidth size and a system bandwidth size.

FIG. 10

(a)

(b)

## Description

[Technical Field]

The present disclosure relates to wireless communication, and more particularly, to a method of transmitting or receiving uplink/downlink signals in a wireless communication system and a device for the same.

[Background Art]

Wireless communication systems have been widely deployed to provide various types of communication services such as voice or data. In general, a wireless communication system is a multiple access system that supports communication of multiple users by sharing available system resources (a bandwidth, transmission power, etc.). Examples of multiple access systems include a code division multiple access (CDMA) system, a frequency division multiple access (FDMA) system, a time division multiple access (TDMA) system, an orthogonal frequency division multiple access (OFDMA) system, a single carrier frequency division multiple access (SC-FDMA) system, and a multi carrier frequency division multiple access (MC-FDMA) system.

As more and more communication devices require larger communication capacities in transmitting and receiving signals, there is a need for mobile broadband communication improved from the legacy radio access technology. Accordingly, communication systems considering services/UEs sensitive to reliability and latency are under discussion. A next-generation radio access technology in consideration of enhanced mobile broadband communication, massive Machine Type Communication (MTC), and Ultra-Reliable and Low Latency Communication (URLLC) may be referred to as new radio access technology (RAT) or new radio (NR).

[Disclosure]

[Technical Problem]

An object of the present disclosure is to provide a more accurate and efficient method of transmitting and receiving signals.

It will be appreciated by those of ordinary skill in the art to which the embodiment(s) pertain that the objects that could be achieved with the embodiment(s) are not limited to what has been particularly described hereinabove and the above and other objects will be more clearly understood from the following detailed description.

[Technical Solution]

In one aspect of the present disclosure, provided herein is a method of communicating with a base station by a UE in a wireless communication system. The method may include receiving, from the base station, first configuration information configuring a bandwidth part (BWP), receiving second configuration information from the base station, the second configuration information including information on an offset and bandwidth size for configuration of at least one subband, and configuring the at least one subband within the BWP based on the second configuration information. The at least one subband may be configured based on a specific granularity determined based on the offset, the bandwidth size, and a size of a system bandwidth.

Alternatively, a boundary of the at least one subband may be aligned with a grid of a resource block group (RBG) configured for the BWP based on the offset, the bandwidth size, and the specific granularity.

Alternatively, the specific granularity may be determined as a resource block group (RBG) size or as a multiple of the RBG size, the RBG size being determined based on the size of the system bandwidth.

Alternatively, the specific granularity may be determined as a minimum resource block group (RBG) size allowing same precoding to be applied within the system bandwidth or as a multiple of the minimum RBG size.

Alternatively, the second configuration information may further include indication information indicating M (where M is an integer) related to the specific granularity, wherein the specific granularity may be determined as a value obtained by multiplying M by the RBG size determined based on the size of the system bandwidth.

Alternatively, a start position of the at least one subband is determined based on a value obtained by multiplying the offset by the specific granularity, wherein a size of the at least one subband may be determined based on a value obtained by multiplying the bandwidth size by the specific granularity.

Alternatively, the at least one subband may be configured only for a specific time interval for full-duplex operation of the base station. The at least one subband may include at least one of a first subband for downlink or a second subband for uplink.

Alternatively, the at least one subband may be configured only for a specific time interval for full-duplex operation of the base station.

Alternatively, the UE may determine that the BWP is configured only with remaining frequency resources among a plurality of frequency resources configured for the BWP for the specific time interval, excluding at least one frequency resource overlapping with the at least one subband.

Alternatively, the second configuration information may be a radio resource control (RRC) parameter for a cell-specific or UE-specific group.

In another aspect of the present disclosure, provided herein is a UE for communicating with a base station in a wireless communication system. The UE may include a radio frequency (RF) transceiver, and a processor connected to the RF transceiver. The processor may control the RF transceiver to perform operations including receiving, from the base station, first configuration information configuring a bandwidth part (BWP), receiving, from the base station, second configuration information from the base station, the second configuration information including information on an offset and bandwidth size for configuration of at least one subband within the BWP, and configuring the at least one subband based on the second configuration information. The at least one subband may be configured based on a specific granularity determined based on the offset, the bandwidth size, and a size of a system bandwidth.

In another aspect of the present disclosure, provided herein is a processing device for controlling a UE in a wireless communication system. The processing device may include at least one processor, and at least one memory connected to the at least one processor and storing instructions, the instructions causing, when executed by the at least one processor, the UE to perform operations. The operations may include receiving, from the base station, first configuration information configuring a bandwidth part (BWP), receiving, from the base station, second configuration information from the base station, the second configuration information including information on an offset and bandwidth size for configuration of at least one subband within the BWP, and configuring the at least one subband based on the second configuration information. The at least one subband may be configured based on a specific granularity determined based on the offset, the bandwidth size, and a size of a system bandwidth.

In another aspect of the present disclosure, provided herein is a method of communicating with a UE by a base station in a wireless communication system. The method may include transmitting, to the UE, first configuration information configuring a bandwidth part (BWP), and transmitting second configuration information to the UE, the second configuration information including information on an offset and bandwidth size for configuration of at least one subband within the BWP. The at least one subband may be configured based on a specific granularity determined based on the offset, the bandwidth size, and a size of a system bandwidth.

[Advantageous Effects]

According to an embodiment of the present disclosure, signal transmission and reception in a wireless communication system may be performed more accurately and efficiently.

Effects to be achieved by embodiment(s) are not limited to what has been particularly described hereinabove and other effects not mentioned herein will be more clearly understood by persons skilled in the art to which embodiment(s) pertain from the following detailed description.

[Description of Drawings]

The accompanying drawings, which are included to provide a further understanding of the disclosure and are incorporated in and constitute a part of this application, illustrate embodiments of the disclosure and together with the description serve to explain the principle of the disclosure.

FIG. 1 illustrates the structure of an LTE system to which embodiment(s) are applicable.

FIG. 2 illustrates the structure of an NR system to which embodiment(s) are applicable.

FIG. 3 illustrates the structure of an NR radio frame to which embodiment(s) are applicable.

FIG. 4 illustrates the slot structure of an NR frame to which embodiment(s) are applicable.

FIG. 5 is a diagram illustrating physical channels and a signal transmission method using the physical channels, which may be used in the embodiment;

FIG. 6 illustrates a process in which a UE transmits ACK/NACK via PUSCH.

FIG. 7 illustrates an example of a CSI-related procedure.

FIG. 8 is a diagram for explaining a method of performing a full duplex operation in an NR system.

FIG. 9 and FIG. 10 are diagrams for explaining sub-band full duplex (SBFD) and single frequency full duplex (SFFD) operations.

FIG. 11 is a diagram illustrating configuring an enhanced BWP for FDR operation of a base station.

FIG. 12 illustrates a method of allocating frequency resources for UL BWP and DL BWP that are adjacent to each other.

FIG. 13 illustrates a method of configuring at least one subband by a UE.

FIG. 14 illustrates a method of configuring at least one subband for a UE by a base station.

FIG. 15 illustrates a communication system applied to the present disclosure;

FIG. 16 illustrates wireless devices applicable to the present disclosure.

FIG. 17 illustrates another example of a wireless device to which the present disclosure is applied.

[Mode for Disclosure]

A wireless communication system is a multiple access system that supports communication with multiple users by sharing available system resources (e.g., bandwidth, transmission power, etc.). Examples of multiple access systems include a CDMA (code division multiple access) system, an FDMA (frequency division multiple access) system, a TDMA (time division multiple access) system, an OFDMA (orthogonal frequency division multiple access) system, a SC-FDMA (single carrier frequency division multiple access) system, and an MC-FDMA (multi carrier frequency division multiple access) system.

A sidelink refers to a communication scheme in which a direct link is established between user equipments (UEs) to directly exchange voice or data between UEs without assistance from a base station (BS). The sidelink is being considered as one way to address the burden on the BS caused by rapidly increasing data traffic.

Vehicle-to-everything (V2X) refers to a communication technology for exchanging information with other vehicles, pedestrians, and infrastructure-built objects through wired/wireless communication. V2X may be divided into four types: vehicle-to-vehicle (V2V), vehicle-to-infrastructure (V2I), vehicle-to-network (V2N), and vehicle-to-pedestrian (V2P). V2X communication may be provided through a PC5 interface and/or a Uu interface.

As more and more communication devices require larger communication capacities in transmitting and receiving signals, there is a need for mobile broadband communication improved from the legacy radio access technology. Accordingly, communication systems considering services/UEs sensitive to reliability and latency are under discussion. A next-generation radio access technology in consideration of enhanced mobile broadband communication, massive MTC, and Ultra-Reliable and Low Latency Communication (URLLC) may be referred to as new radio access technology (RAT) or new radio (NR). Even in NR, V2X communication may be supported.

Techniques described herein may be used in various wireless access systems such as code division multiple access (CDMA), frequency division multiple access (FDMA), time division multiple access (TDMA), orthogonal frequency division multiple access (OFDMA), single carrier-frequency division multiple access (SC-FDMA), etc. CDMA may be implemented as a radio technology such as universal terrestrial radio access (UTRA) or CDMA2000. TDMA may be implemented as a radio technology such as global system for mobile communications (GSM)/general packet radio service (GPRS)/Enhanced Data Rates for GSM Evolution (EDGE). OFDMA may be implemented as a radio technology such as IEEE 802.11 (Wi-Fi), IEEE 802.16 (WiMAX), IEEE 802.20, evolved-UTRA (E-UTRA) etc. UTRA is a part of universal mobile telecommunications system (UMTS). 3GPP LTE is a part of Evolved UMTS (E-UMTS) using E-UTRA. 3GPP LTE employs OFDMA for downlink and SC-FDMA for uplink. LTE-A is an evolution of 3GPP LTE.

5G NR is a successor technology of LTE-A, and is a new clean-slate mobile communication system with characteristics such as high performance, low latency, and high availability. 5G NR may utilize all available spectrum resources, from low frequency bands below 1 GHz to intermediate frequency bands from 1 GHz to 10 GHz and high frequency (millimeter wave) bands above 24 GHz.

For clarity of explanation, LTE-A or 5G NR is mainly described, but the technical spirit of the embodiment(s) is not limited thereto.

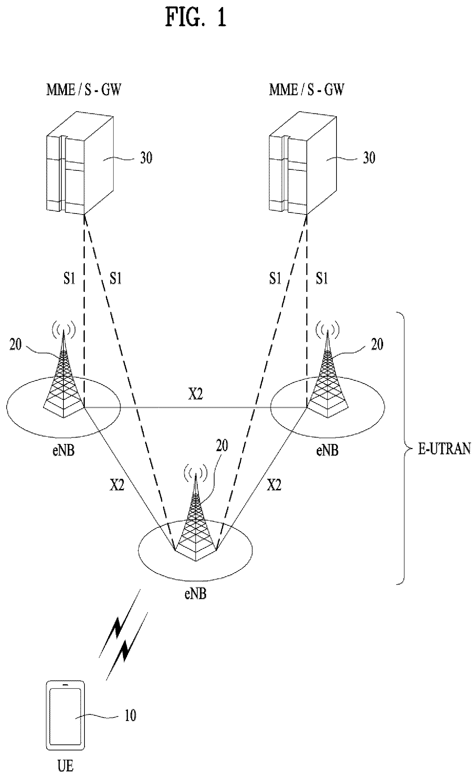

FIG. 1 illustrates the structure of an LTE system to which the present disclosure is applicable. This may also be called an evolved UMTS terrestrial radio access network (E-UTRAN) or LTE/LTE-A system.

Referring to FIG. 1, the E-UTRAN includes evolved Node Bs (eNBs) 20 which provide a control plane and a user plane to UEs 10. A UE 10 may be fixed or mobile, and may also be referred to as a mobile station (MS), user UE (UT), subscriber station (SS), mobile UE (MT), or wireless device. An eNB 20 is a fixed station communication with the UE 10 and may also be referred to as a base station (BS), a base transceiver system (BTS), or an access point.

eNBs 20 may be connected to each other via an X2 interface. An eNB 20 is connected to an evolved packet core (EPC) 39 via an S1 interface. More specifically, the eNB 20 is connected to a mobility management entity (MME) via an S1-MME interface and to a serving gateway (S-GW) via an S1-U interface.

The EPC 30 includes an MME, an S-GW, and a packet data network-gateway (P-GW). The MME has access information or capability information about UEs, which are mainly used for mobility management of the UEs. The S-GW is a gateway having the E-UTRAN as an end point, and the P-GW is a gateway having a packet data network (PDN) as an end point.

Based on the lowest three layers of the open system interconnection (OSI) reference model known in communication systems, the radio protocol stack between a UE and a network may be divided into Layer 1 (L1), Layer 2 (L2) and Layer 3 (L3). These layers are defined in pairs between a UE and an Evolved UTRAN (E-UTRAN), for data transmission via the Uu interface. The physical (PHY) layer at L1 provides an information transfer service on physical channels. The radio resource control (RRC) layer at L3 functions to control radio resources between the UE and the network. For this purpose, the RRC layer exchanges RRC messages between the UE and an eNB.

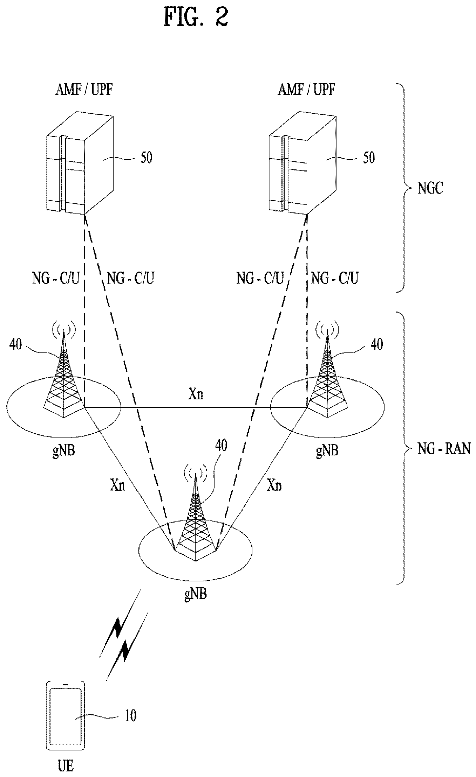

FIG. 2 illustrates the structure of a NR system.

Referring to FIG. 2, a next generation radio access network (NG-RAN) may include a next generation Node B (gNB) and/or an eNB, which provides user-plane and control-plane protocol termination to a UE. In FIG. 2, the NG-RAN is shown as including only gNBs, by way of example. A gNB and an eNB are connected to each other via an Xn interface. The gNB and the eNB are connected to a 5G core network (5GC) via an NG interface. More specifically, the gNB and the eNB are connected to an access and mobility management function (AMF) via an NG-C interface and to a user plane function (UPF) via an NG-U interface.

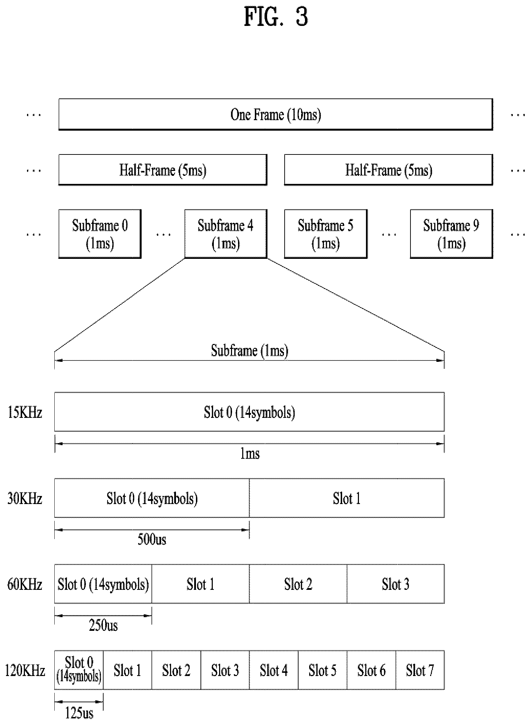

FIG. 3 illustrates the structure of a NR radio frame to which the present disclosure is applicable.

Referring to FIG. 3, a radio frame may be used for UL transmission and DL transmission in NR. A radio frame is 10 ms in length, and may be defined by two 5-ms half-frames. An HF may include five 1-ms subframes. A subframe may be divided into one or more slots, and the number of slots in an SF may be determined according to a subcarrier spacing (SCS). Each slot may include 12 or 14 OFDM(A) symbols according to a cyclic prefix (CP).

In a normal CP (NCP) case, each slot may include 14 symbols, whereas in an extended CP (ECP) case, each slot may include 12 symbols. Herein, a symbol may be an OFDM symbol (or CP-OFDM symbol) or an SC-FDMA symbol (or DFT-s-OFDM symbol).

Table 1 below lists the number of symbols per slot $N^{slot}_{symb}$, the number of slots per frame $N^{frame,u}_{slot}$, and the number of slots per subframe $N^{subframe,u}_{slot}$ according to an SCS configuration $\mu$ in the NCP case.

[Table 1]

| SCS ($15*2^u$) | $N^{slot}_{symb}$ | $N^{frame,u}_{slot}$ | $N^{subframe,u}_{slot}$ |
|---|---|---|---|
| 15KHz (u=0) | 14 | 10 | 1 |
| 30KHz (u=1) | 14 | 20 | 2 |
| 60KHz (u=2) | 14 | 40 | 4 |
| 120KHz (u=3) | 14 | 80 | 8 |
| 240KHz (u=4) | 14 | 160 | 16 |

Table 2 below lists the number of symbols per slot, the number of slots per frame, and the number of slots per subframe according to an SCS in the ECP case.

[Table 2]

| SCS ($15*2^u$) | $N^{slot}_{symb}$ | $N^{frame,u}_{slot}$ | $N^{subframe,u}_{slot}$ |
|---|---|---|---|
| 60KHz (u=2) | 12 | 40 | 4 |

In the NR system, different OFDM(A) numerologies (e.g., SCSs, CP lengths, etc.) may be configured for a plurality of cells aggregated for one UE. Thus, the (absolute) duration of a time resource (e.g., SF, slot, or TTI) including the same number of symbols may differ between the aggregated cells (such a time resource is commonly referred to as a time unit (TU) for convenience of description). In NR, multiple numerologies or SCSs to support various 5G services may be supported. For example, a wide area in conventional cellular bands may be supported when the SCS is 15 kHz, and a dense urban environment, lower latency, and a wider carrier bandwidth may be supported when the SCS is 30 kHz/60 kHz. When the SCS is 60 kHz or higher, a bandwidth wider than 24.25 GHz may be supported to overcome phase noise.

The NR frequency band may be defined as two types of frequency ranges. The two types of frequency ranges may be FR1 and FR2. The numerical values of the frequency ranges may be changed. For example, the two types of frequency ranges may be configured as shown in Table 3 below. Among the frequency ranges used in the NR system, FR1 may represent "sub 6 GHz range" and FR2 may represent "above 6 GHz range" and may be called millimeter wave (mmW).

[Table 3]

| Frequency Range designation | Corresponding frequency range | Subcarrier Spacing (SCS) |
|---|---|---|
| FR1 | 450MHz - 6000MHz | 15, 30, 60kHz |

(continued)

| Frequency Range designation | Corresponding frequency range | Subcarrier Spacing (SCS) |
|---|---|---|
| FR2 | 24250MHz - 52600MHz | 60, 120, 240kHz |

As mentioned above, the numerical values of the frequency ranges of the NR system may be changed. For example, FR1 may include a band of 410 MHz to 7125 MHz as shown in Table 4 below. That is, FR1 may include a frequency band of 6 GHz (or 5850 MHz, 5900 MHz, 5925 MHz, etc.) or higher. For example, the frequency band of 6 GHz (or 5850 MHz, 5900 MHz, 5925 MHz, etc.) or higher included in FR1 may include an unlicensed band. The unlicensed band may be used for various purposes, for example, for communication for vehicles (e.g., autonomous driving).

[Table 4]

| Frequency Range designation | Corresponding frequency range | Subcarrier Spacing (SCS) |
|---|---|---|
| FR1 | 410MHz - 7125MHz | 15, 30, 60kHz |
| FR2 | 24250MHz - 52600MHz | 60, 120, 240kHz |

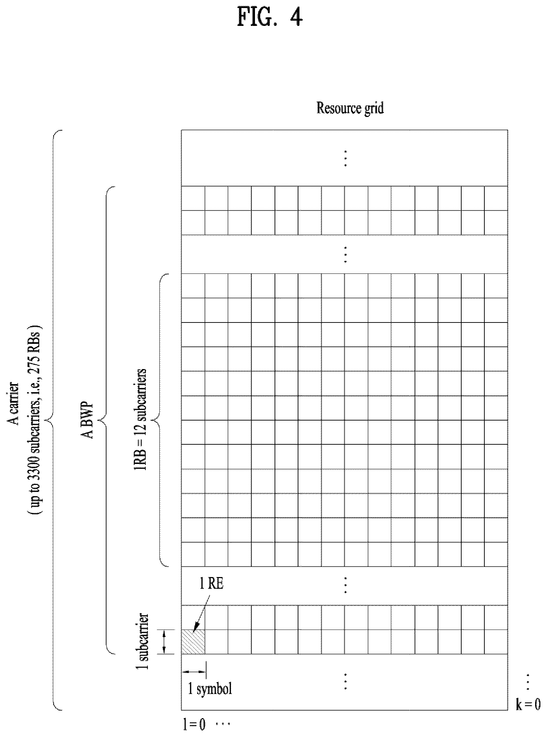

FIG. 4 illustrates the slot structure of a NR frame.

Referring to FIG. 4, one slot includes a plurality of symbols in the time domain. For example, one slot may include 14 symbols in a normal CP and 12 symbols in an extended CP. Alternatively, one slot may include 7 symbols in the normal CP and 6 symbols in the extended CP.

A carrier may include a plurality of subcarriers in the frequency domain. A resource block (RB) is defined as a plurality of consecutive subcarriers (e.g., 12 subcarriers) in the frequency domain. A bandwidth part (BWP) may be defined as a plurality of consecutive (P)RBs in the frequency domain, and the BWP may correspond to one numerology (e.g., SCS, CP length, etc.). The carrier may include up to N (e.g., 5) BWPs. Data communication may be conducted in an activated BWP. In a resource grid, each element may be referred to as a resource element (RE) and may be mapped to one complex symbol.

The wireless interface between UEs or the wireless interface between a UE and a network may be composed of an L1 layer, an L2 layer, and an L3 layer. In various embodiments of the present disclosure, the L1 layer may represent a physical layer. The L2 layer may represent, for example, at least one of a MAC layer, an RLC layer, a PDCP layer, and an SDAP layer. The L3 layer may represent, for example, an RRC layer.

## Bandwidth part (BWP)

In the NR system, up to 400 MHz may be supported per component carrier (CC). If a UE operating on a wideband CC always operates with the RF for the entire CCs turned on, the battery consumption of the UE may be increased. Alternatively, considering various use cases (e.g., eMBB, URLLC, Mmtc, V2X, etc.) operating within one wideband CC, different numerologies (e.g., sub-carrier spacings) may be supported for different frequency bands within a specific CC. Alternatively, the capability for the maximum bandwidth may differ among the UEs. In consideration of this, the BS may instruct the UE to operate only in a partial bandwidth, not the entire bandwidth of the wideband CC. The partial bandwidth is defined as a bandwidth part (BWP) for simplicity. Here, the BWP may be composed of resource blocks (RBs) contiguous on the frequency axis, and may correspond to one numerology (e.g., sub-carrier spacing, CP length, slot/mini-slot duration).

The BS may configure multiple BWPs in one CC configured for the UE. For example, a BWP occupying a relatively small frequency region may be configured in a PDCCH monitoring slot, and a PDSCH indicated by the PDCCH in a larger BWP may be scheduled. Alternatively, when UEs are concentrated in a specific BWP, some of the UEs may be configured in another BWP for load balancing. Alternatively, a spectrum in the middle of the entire bandwidth may be punctured and two BWPs on both sides may be configured in the same slot in consideration of frequency-domain inter-cell interference cancellation between neighbor cells. That is, the BS may configure at least one DL/UL BWP for the UE associated with the wideband CC and activate at least one DL/UL BWP among the configured DL/UL BWP(s) at a specific time (through L1 signaling, MAC CE or RRC signaling, etc.). The BS may instruct the UE to switch to another configured DL/UL BWP (through L1 signaling, MAC CE or RRC signaling, etc.). Alternatively, when a timer expires, the UE may switch to a predetermined DL/UL BWP. The activated DL/UL BWP is defined as an active DL/UL BWP. The UE may fail to receive DL/UL BWP configuration during an initial access procedure or before an RRC connection is set up. A DL/UL BWP assumed by the UE in this situation is defined as an initial active DL/UL BWP.

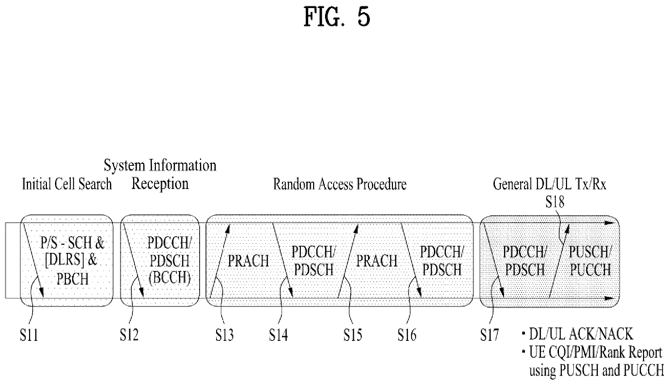

FIG. 5 is a diagram illustrating physical channels and a signal transmission method using the physical channels, which may be used in various embodiments.

Referring to FIG. 5, when powered on or when a UE initially enters a cell, the UE performs initial cell search involving synchronization with a BS in step S11. For initial cell search, the UE receives a synchronization signal block (SSB). The SSB includes a primary synchronization signal (PSS), a secondary synchronization signal (SSS), and a physical broadcast channel (PBCH). The UE synchronizes with the BS and acquires information such as a cell Identifier (ID) based on the PSS/SSS. Then the UE may receive broadcast information from the cell on the PBCH. In the meantime, the UE may check a downlink channel status by receiving a downlink reference signal (DL RS) during initial cell search.

After initial cell search, the UE may acquire more specific system information by receiving a physical downlink control channel (PDCCH) and receiving a physical downlink shared channel (PDSCH) based on information of the PDCCH in step S12.

Subsequently, to complete connection to the eNB, the UE may perform a random access procedure with the eNB (S13 to S16). In the random access procedure, the UE may transmit a preamble on a physical random access channel (PRACH) (S13) and may receive a PDCCH and a random access response (RAR) for the preamble on a PDSCH associated with the PDCCH (S14). The UE may transmit a physical uplink shared channel (PUSCH) by using scheduling information in the RAR (S15), and perform a contention resolution procedure including reception of a PDCCH signal and a PDSCH signal corresponding to the PDCCH signal (S16).

Aside from the above 4-step random access procedure (4-step RACH procedure or type-1 random access procedure), when the random access procedure is performed in two steps (2-step RACH procedure or type-2 random access procedure), steps S13 and S15 may be performed as one UE transmission operation (e.g., an operation of transmitting message A (MsgA) including a PRACH preamble and/or a PUSCH), and steps S14 and S16 may be performed as one BS transmission operation (e.g., an operation of transmitting message B (MsgB) including an RAR and/or contention resolution information)

After the above procedure, the UE may receive a PDCCH and/or a PDSCH from the BS (S17) and transmit a PUSCH and/or a physical uplink control channel (PUCCH) to the BS (S18), in a general UL/DL signal transmission procedure.

Control information that the UE transmits to the BS is generically called uplink control information (UCI). The UCI includes a hybrid automatic repeat and request acknowledgement/negative acknowledgement (HARQ-ACK/NACK), a scheduling request (SR), a channel quality indicator (CQI), a precoding matrix index (PMI), a rank indicator (RI), etc.

In general, UCI is transmitted periodically on a PUCCH. However, if control information and traffic data should be transmitted simultaneously, the control information and traffic data may be transmitted on a PUSCH. In addition, the UCI may be transmitted aperiodically on the PUSCH, upon receipt of a request/command from a network.

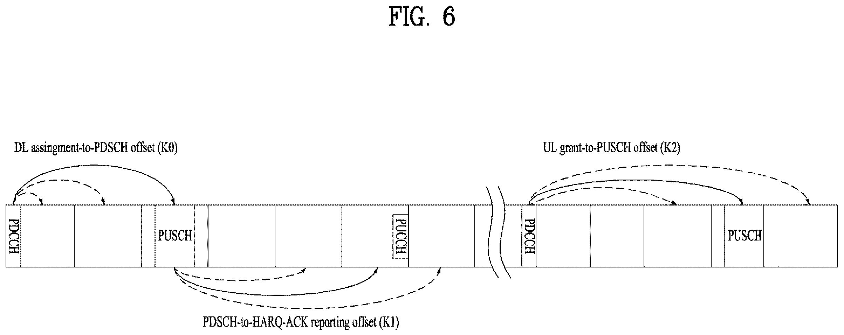

FIG. 6 illustrates an exemplary ACK/NACK transmission process

Referring to FIG. 6, the UE may detect a PDCCH in slot #n. The PDCCH includes DL scheduling information (e.g., DCI format 1_0 or DCI format 1_1). The PDCCH indicates a DL assignment-to-PDSCH offset, K0 and a PDSCH-to-HARQ-ACK reporting offset, K1. For example, DCI format 1_0 and DCI format 1_1 may include the following information.

Frequency domain resource assignment: Indicates an RB set assigned to a PDSCH.

Time domain resource assignment: Indicates K0 and the starting position (e.g., OFDM symbol index) and length (e.g., the number of OFDM symbols) of the PDSCH in a slot

PDSCH-to-HARQ_feedback timing indicator: Indicates K1.

HARQ process number (4 bits): Indicates the HARQ process ID of data (e.g., a PDSCH or TB).

PUCCH resource indicator (PRI): Indicates a PUCCH resource to be used for UCI transmission among a plurality of PUCCH resources in a PUCCH resource set.

After receiving a PDSCH in slot #(n+K0) according to the scheduling information of slot #n, the UE may transmit UCI on a PUCCH in slot #(n+K1). The UCI may include an HARQ-ACK response to the PDSCH. FIG. 5 is based on the assumption that the SCS of the PDSCH is equal to the SCS of the PUCCH, and slot #n1=slot #(n+K0), for convenience, which should not be construed as limiting the present disclosure. When the SCSs are different, K1 may be indicated/interpreted based on the SCS of the PUCCH.

In the case where the PDSCH is configured to carry one TB at maximum, the HARQ-ACK response may be configured in one bit. In the case where the PDSCH is configured to carry up to two TBs, the HARQ-ACK response may be configured in two bits if spatial bundling is not configured and in one bit if spatial bundling is configured. When slot #(n+K1) is designated as an HARQ-ACK transmission timing for a plurality of PDSCHs, UCI transmitted in slot #(n+K1) includes HARQ-ACK responses to the plurality of PDSCHs.

Whether the UE should perform spatial bundling for an HARQ-ACK response may be configured for each cell group (e.g., by RRC/higher layer signaling). For example, spatial bundling may be configured for each individual HARQ-ACK response transmitted on the PUCCH and/or HARQ-ACK response transmitted on the PUSCH.

When up to two (or two or more) TBs (or codewords) may be received at one time (or schedulable by one DCI) in a corresponding serving cell (e.g., when a higher layer parameter *maxNrofCodeWordsScheduledByDCI* indicates 2 TBs), spatial bundling may be supported. More than four layers may be used for a 2-TB transmission, and up to four layers may be used for a 1-TB transmission. As a result, when spatial bundling is configured for a corresponding cell group, spatial bundling may be performed for a serving cell in which more than four layers may be scheduled among serving cells of the cell group. A UE which wants to transmit an HARQ-ACK response through spatial bundling may generate an HARQ-ACK response by performing a (bit-wise) logical AND operation on A/N bits for a plurality of TBs.

For example, on the assumption that the UE receives DCI scheduling two TBs and receives two TBs on a PDSCH based on the DCI, a UE that performs spatial bundling may generate a single A/N bit by a logical AND operation between a first A/N bit for a first TB and a second A/N bit for a second TB. As a result, when both the first TB and the second TB are ACKs, the UE reports an ACK bit value to a BS, and when at least one of the TBs is a NACK, the UE reports a NACK bit value to the BS.

For example, when only one TB is actually scheduled in a serving cell configured for reception of two TBs, the UE may generate a single A/N bit by performing a logical AND operation on an A/N bit for the one TB and a bit value of 1. As a result, the UE reports the A/N bit for the one TB to the BS.

There is a plurality of parallel DL HARQ processes for DL transmissions at the BS/UE. The plurality of parallel HARQ processes enable continuous DL transmissions, while the BS is waiting for an HARQ feedback indicating successful or failed reception of a previous DL transmission. Each HARQ process is associated with an HARQ buffer in the medium access control (MAC) layer. Each DL HARQ process manages state variables such as the number of MAC physical data unit (PDU) transmissions, an HARQ feedback for a MAC PDU in a buffer, and a current redundancy version. Each HARQ process is identified by an HARQ process ID.

The PUSCH transmission process is described below.

The UE may detect a PDCCH in slot #n. The PDCCH includes DL scheduling information (e.g., DCI format 1_0 or 1_1). DCI format 1_0 or 1_1 may include the following information.

Frequency domain resource assignment: Indicates an RB set assigned to the PUSCH.

Time domain resource assignment: Indicates a slot offset K2 and the starting position (e.g., OFDM symbol index) and duration (e.g., the number of OFDM symbols) of the PUSCH in a slot. The starting symbol and length of the PUSCH may be indicated by a start and length indicator value (SLIV), or separately.

The UE may then transmit a PUSCH in slot #(n+K2) according to the scheduling information in slot #n. The PUSCH includes a UL-SCH TB.

## CSI related operation

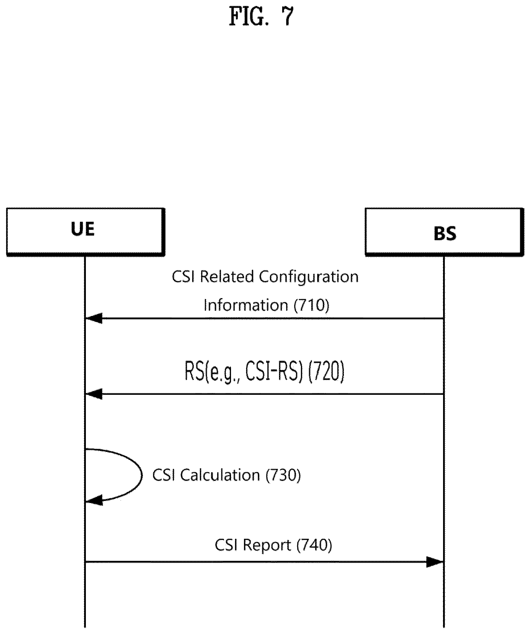

FIG. 7 shows an example of a CSI related procedure.

The UE receives configuration information related to CSI from the BS via RRC signaling (710). The CSI-related configuration information may include at least one of channel state information-interference measurement (CSI-IM)-related information, CSI measurement-related information, CSI resource configuration-related information, CSI-RS resource-related information, or CSI report configuration-related information.

- A CSI-IM resource may be configured for interference measurement (IM) of the UE. In the time domain, the CSI-IM resource set may be configured periodic, semi-persistent, or aperiodic. The CSI-IM resource may be configured to zero power (ZP)-CSI-RS for the UE. ZP-CSI-RS may be configured to be distinguished from non-zero power (NZP)-CSI-RS.
- The UE may assume that CSI-RS resource(s) for channel measurement configured for one CSI reporting and CSI-IM/NZP CSI-RS resource(s) for interference measurement have a QCL relationship with respect to 'QCL-TypeD' for each resource (when NZP CSI-RS resource(s) are used for interference measurement).
- CSI resource configuration may include at least one of a CSI-IM resource for interference measurement, an NZP CSI-RS resource for interference measurement, and an NZP CSI-RS resource for channel measurement. The channel measurement resource (CMR) may be a NZP CSI-RS for CSI acquisition, and the interference measurement resource (IMR) may be an NZP CSI-RS for CSI-IM and IM.
- A CSI-RS may be configured for one or more UEs. Different CSI-RS configurations may be provided for each UE, or the same CSI-RS configuration may be provided to a plurality of UEs. The CSI-RS may support up to 32 antenna ports. CSI-RSs corresponding to N (N being 1 or more) antenna ports may be mapped to N RE locations within a time-frequency unit corresponding to one slot and one RB. When N is 2 or more, N-port CSI-RSs may be multiplexed in CDM, FDM and/or TDM methods. The CSI-RS may be mapped to the remaining REs except for REs to which CORESET, DMRS, and SSB are mapped. In the frequency domain, the CSI-RS may be configured for the entire bandwidth, a partial bandwidth part (BWP), or a partial bandwidth. The CSI-RS may be transmitted in each RB within the bandwidth in which the CSI-RS is configured (i.e., density = 1), or the CSI-RS may be transmitted in every second RB (e.g., even or odd RB) (i.e., density = 1/2). When the CSI-RS is used as a tracking reference signal (TRS), a single-port CSI-RS may be mapped on three subcarriers in each resource block (i.e., density = 3). One or more CSI-RS resource sets may be configured for the UE in the time domain. Each CSI-RS resource set may include one or more CSI-RS configurations. Each CSI-RS resource set may be configured periodic, semi-persistent, or aperiodic.

- The CSI report configuration may include configuration for a feedback type, a measurement resource, a report type, and the like. The NZP-CSI-RS resource set may be used for CSI reporting configuration of a corresponding UE. An NZP-CSI-RS resource set may be associated with the CSI-RS or the SSB. A plurality of periodic NZP-CSI-RS resource sets may be configured as TRS resource sets. (i) The feedback types include a channel quality indicator (CQI), a precoding matrix indicator (PMI), a CSI-RS resource indicator (CRI), an SSB resource block indicator (SSBRI), a layer indicator (LI), a rank indicator (RI), a first layer (L1)-reference signal received strength (RSRP), and the like. (ii) The measurement resource may include configuration for a downlink signal and/or downlink resource on which measurement is performed by the UE to determine feedback information. The measurement resource may be configured as a ZP and/or NZP CSI-RS resource set associated with the CSI report configuration. The NZP CSI-RS resource set may include a CSI-RS set or an SSB set. For example, the L1-RSRP may be measured for a CSI-RS set or for an SSB set. (iii) The report type may include configuration for a time when the UE performs a report and an uplink channel. The reporting time may be configured to be periodic, semi-persistent or aperiodic. The periodic CSI report may be transmitted on a PUCCH. The semi-persistent CSI report may be transmitted on a PUCCH or a PUSCH based on a MAC CE indicating activation/deactivation. The aperiodic CSI report may be indicated by DCI signaling. For example, a CSI request field of an uplink grant may indicate one of various report trigger sizes. The aperiodic CSI report may be transmitted on a PUSCH.

The UE measures CSI based on configuration information related to CSI. The CSI measurement may include receiving the CSI-RS (720) and acquiring the CSI by computing the received CSI-RS (730).

The UE may transmit a CSI report to the BS (740). For the CSI report, the time and frequency resource available to the UE are controlled by the BS. Channel state information (CSI) includes at least one of a channel quality indicator (CQI), a precoding matrix indicator (PMI), a CSI-RS resource indicator (CRI), a SS/PBCH block resource indicator (SSBRI), a layer indicator (LI), a rank indicator (RI), an L1-RSRP, and/or an L-SINR.

A time domain behavior of CSI reporting supports periodic, semi-persistent, aperiodic. i) Periodic CSI reporting is performed in a short PUCCH, a long PUCCH. Periodicity and a slot offset of periodic CSI reporting may be configured by RRC and refers to a CSI-ReportConfig IE. ii) SP (semi-periodic) CSI reporting is performed in a short PUCCH, a long PUCCH, or a PUSCH. For SP CSI in a short/long PUCCH, periodicity and a slot offset are configured by RRC and a CSI report is activated/deactivated by separate MAC CE/DCI. For SP CSI in a PUSCH, periodicity of SP CSI reporting is configured by RRC, but a slot offset is not configured by RRC and SP CSI reporting is activated/deactivated by DCI (format 0_1). For SP CSI reporting in a PUSCH, a separated RNTI (SP-CSI C-RNTI) is used. An initial CSI report timing follows a PUSCH time domain allocation value indicated by DCI and a subsequent CSI report timing follows a periodicity configured by RRC. DCI format 0_1 may include a CSI request field and activate/deactivate a specific configured SP-CSI trigger state. SP CSI reporting has activation/deactivation equal or similar to a mechanism having data transmission in a SPS PUSCH. iii) Aperiodic CSI reporting is performed in a PUSCH and is triggered by DCI. In this case, information related to trigger of aperiodic CSI reporting may be delivered/indicated/configured through MAC-CE. For AP CSI having an AP CSI-RS, AP CSI-RS timing is configured by RRC and timing for AP CSI reporting is dynamically controlled by DCI.

CSI codebooks defined in the NR standard (e.g., PMI codebook) may be broadly divided into Type I codebook and Type II codebook. The Type I codebook primarily targets single user (SU)-MIMO, supporting both high-order and low-order. The Type II codebook may mainly support MI-MIMO supporting up to 2 layers. Compared to Type I, the Type II codebook may provide more accurate CSI, but signaling overhead may increase correspondingly. The Enhanced Type II codebook is introduced to address the CSI overhead shortcomings of the existing Type II codebook by reducing the payload of the codebook by considering a correlation of the frequency axis.

CSI reporting via a PUSCH may be configured to Part 1 and Part 2. The Part 1 has a fixed payload size and is used to identify the number of bits of information in the Part 2. The Part 1 may be transmitted in its entirety before the Part 2.

- For Type I CSI feedback, the Part 1 includes RI (if reported), CRI (if reported), and CQI of a first code word. The Part 2 includes PMI, and when RI > 4, the Part 2 includes CQI.
- For Type II CSI feedback, the Part 1 includes an indication of the number of non-zero WB amplitude coefficients per layer of RI (if reported), CQI, and Type II CSI. The Part 2 includes the PMI of Type II CSI.
- For Enhanced Type II CSI feedback, the Part 1 includes an indication of the total number of non-zero WB amplitude coefficients for all layers of RI (if reported), CQI, and Enhanced Type II CSI. The Part 2 includes the PMI of Enhanced Type II CSI.

If CSI reporting on PUSCH includes two parts and the CSI payload to be reported is less than a payload size provided by the PUSCH resources allocated for CSI reporting, the UE may partially omit Part 2 CSI.

Semi-persistent CSI reporting performed in PUCCH format 3 or 4 supports Type II CSI feedback, but supports only Part 1 of Type II CSI feedback.

## Quasi-co location (QCL)

When the channel property of an antenna port is to be inferred from a channel of another antenna port, the two antenna ports are quasi co-located. The channel property may include one or more of delay spread, Doppler spread, frequency/Doppler shift, average received power, received Timing/average delay, and a spatial RX parameter.

A list of a plurality of transmission configuration indicator (TCI) state configurations may be configured in the UE through a higher layer parameter PDSCH-Config. Each TCI state is linked to a QCL configuration parameter between one or two DL reference signals and the DM-RS port of a PDSCH. The QCL may include qcl-Type1 for a first DL RS and qcl-Type2 for a second DL RS. The QCL type may correspond to one of the following.

- 'QCL-TypeA': {Doppler shift, Doppler spread, average delay, delay spread}
- 'QCL-TypeB': {Doppler shift, Doppler spread}
- 'QCL-TypeC': {Doppler shift, average delay}
- 'QCL-TypeD': {Spatial Rx parameter}

## Beam Management (BM)

BM is a series of processes for acquiring and maintaining a set of BS (or transmission and reception point (TRP)) beams and/or UE beams available for DL and UL transmissions/receptions. BM may include the following processes and terminology.

Beam measurement: The BS or the UE measures the characteristics of a received beamformed signal.

Beam determination: The BS or the UE selects its Tx beam/reception (Rx) beam.

Beam sweeping: A spatial domain is covered by using Tx beams and/or Rx beams in a predetermined manner during a predetermined time interval.

Beam report: The UE reports information about a beamformed signal based on a beam measurement.

The BM process may be divided into (1) a DL BM process using an SSB or a CSI-RS and (2) a UL BM process using a sounding reference signal (SRS). Further, each BM process may include Tx beam sweeping for determining a Tx beam and Rx beam sweeping for determining an Rx beam.

A DL BM process may include (1) transmission of beamformed DL RSs (e.g., CSI-RSs or SSBs) from a BS and (2) beam reporting from a UE.

Here, the beam report may include preferred DL RS ID(s) and reference signal received power(s) (RSRP(s)) corresponding to the preferred DL RS ID(s). A DL RS ID may be an SSB resource indicator (SSBRI) or a CSI-RS resource indicator (CRI).

## Full duplex operation for NR

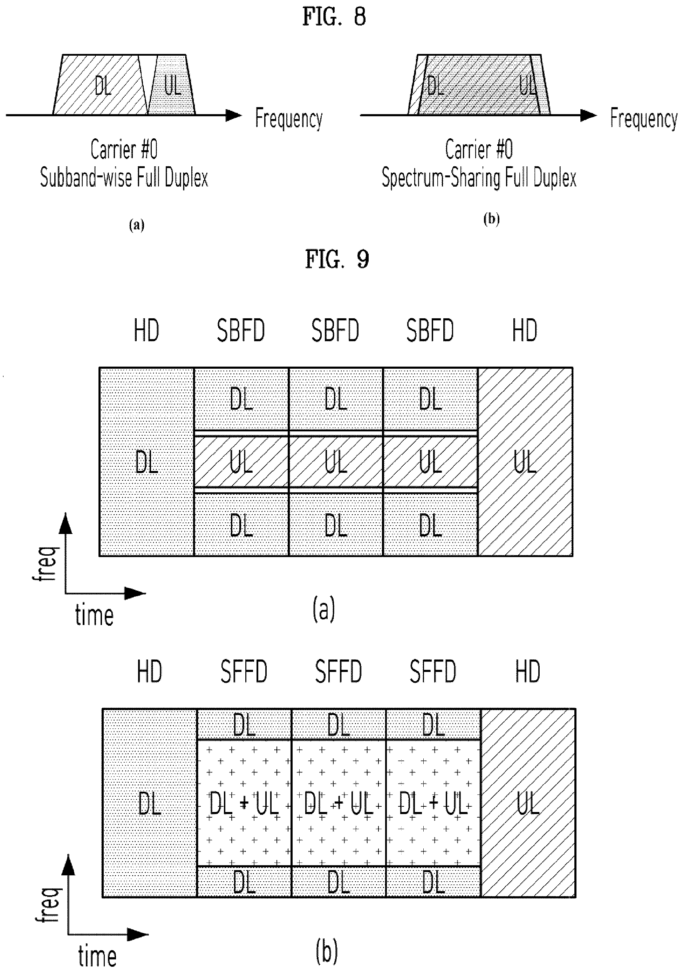

FIG. 8 is a diagram for explaining a method of performing a full duplex operation in an NR system.

In 5G, new types of services such as Extended reality (XR), AI-based services, and self-driving cars have been made. These services have the characteristics of dynamically changing traffic in both DL and UL directions and require low latency in packet transmission. 5G services may experience explosive increases in traffic load to support these diverse new use cases. On the other hand, the existing semi-static or dynamic TDD UL/DL configurations may have limitations in transmission time delay and interference between operators. The existing FDD method may have limitations in terms of efficient frequency resource utilization in the DL/UL directions. Therefore, introduction of a full duplex operation within a single carrier has been discussed for low latency and efficient resource utilization in NR.

Referring to FIG. 8, a method of applying the full duplex operation in an intra-carrier is illustrated. In detail, the full duplex operation may be considered as a subband-wise full duplex (SB-FD) scheme illustrated in (a) of FIG. 8 and a spectrum-sharing full duplex (SS-FD) scheme illustrated in (b) of FIG. 8.

For SB-FD, transmission and reception of DL and UL may be performed with different frequency resources in the same carrier. That is, DL and UL may have different frequency resources for the same time resource. For SS-FD, transmission and reception of DL and UL are performed through the same frequency resource or overlapped frequency resources in the same carrier. That is, for the same time resource, DL and UL may be allocated the same or overlapping frequency resources.

The full duplex operation may be combined with the existing half-duplex operation. For example, in the existing half-duplex-based TDD operation, only some time resources may be used for the full duplex operation. In time resources in which the full duplex operation is performed, either SB-FD or SS-FD operations may be performed.

Hereinafter, in a time resource operating as FD (e.g., SB-FD operation or SS-FD operation), a frequency resource operating as DL from among all frequency resources is defined as a DL sub-band, and a frequency resource operating as UL is defined as a UL sub-band.

In the case of full duplex (hereinafter, FD) operation as described above, the FD operation may be performed both from perspectives of a gNB and a UE. For example, both the gNB and the UE may perform transmission and reception of DL/UL simultaneously by using the same or different frequency resources in the same time resource. Alternatively, only the gNB may perform an FD operation (in the same time resource) and the UE may perform an HD operation. The gNB may simultaneously perform transmission and reception of DL and UL by using the same or different frequency resources in the same time resource, but the UE may perform only DL reception or UL transmission in a specific time resource. In this case, the gNB may perform the FD operation in a way that performs DL transmission and UL reception for different UEs at the same time (or, the same time resource).

The content described below is generally explained assuming that the gNB performs the FD operation and the UE performs the HD operation, but may also be applied to a case in which both the gNB and the UE perform the FD operation. Based on the above discussion, the following describes in detail a method of configuring a BWP resource for an intra-carrier FD operation.

**Background of FDR**

Introduction of FDR has been discussed in certain scenarios (e.g. 3GPP RAN plenary). There are two types of FDRs discussed in the above scenarios, first, there is an FDR in which the gNB transmits and receives DL and UL (or transmits DL and receives UL) at the same frequency at the same time, and the other is an FDR in which the gNB transmits and receives DL and UL (or transmits DL and receives UL) at different frequencies at the same time. Here, different frequencies, unlike FDD, mean different frequency resources but different frequencies within the carrier or spectrum. For all cases, the UE may or may not support FDR, which means transmitting and receiving at the same time, whereas for all cases, it is assumed that the gNB performs transmitting and receiving at the same time.

In the operation of such FDR, gNB can consider dividing and setting the time intervals of HD (half duplex) and FD (full duplex). This can be largely divided into SBFD (sub-band full duplex) and SFFD (single frequency full duplex), and the slot configuration and cell resource pattern for this can be considered to operate based on the following example.

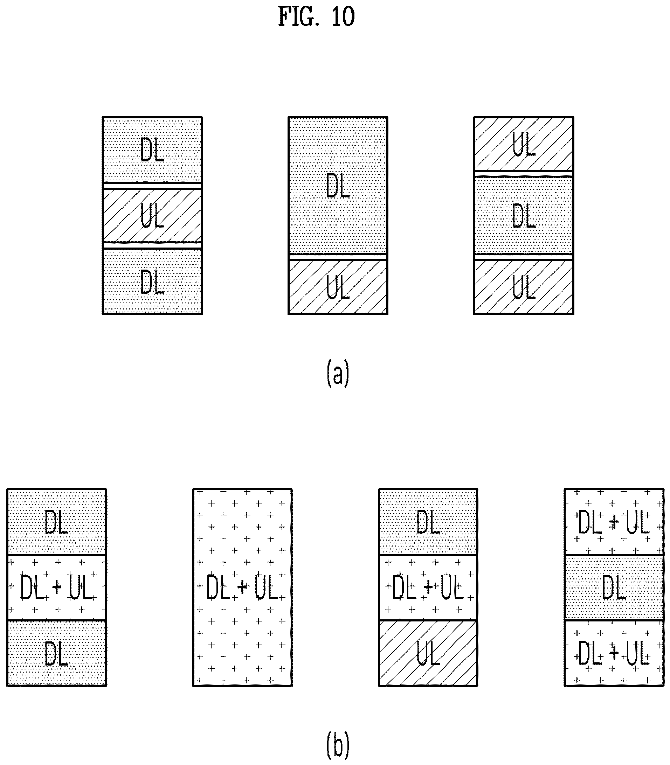

First, the SBFD may be considered as (a) of FIG. 9 and (a) of FIG. 10. In detail, referring to (a) of FIG. 10, a sub-band region of DL and a sub-band region of UL may not overlap each other. In this case, a guard band may exist between the sub-band region of DL and the sub-band region of UL (example of slot configuration). Alternatively, referring to (a) of FIG. 9, the SBFD operation may be performed based on a resource pattern of a cell or BS. For example, in the resource pattern, half-duplex (HD) slots/symbols and SBFD slots/symbols may be TDMed with each other.

Alternatively, SFFD may be considered as examples such as those in FIG. 9 (b) and FIG. 10 (b). Specifically, referring to FIG. 10 (b), the sub-band region of DL and the sub-band region of UL may overlap each other. Alternatively, referring to FIG. 9 (b), the SFFD operation may be performed based on a resource pattern of a cell or a base station. For example, in the resource pattern, an HD (half-duplex) slot/symbol and an SBFD slot/symbol may be TDMed with each other.

Hereinafter, for ease of description, a time interval in which DL transmission and UL reception exist at the same time at the same/different frequencies from the perspective of the gNB operating in SBFD (or SFFD) is defined and described as an SBFD slot, SFFD slot, or full duplex slot (or FD slot), and a slot in which SBFD operation is not performed is defined and described as a half duplex slot (or HD slot). SFFD may also be defined as SSFD (Spectrum Sharing full duplex). Hereinafter, the method in which DL and UL are transmitted and received through the same frequency resource in overlapping slots/symbols is defined and described as SSFD.

**FDRA (frequency domain resource allocation)**

For frequency domain resource allocation (FDRA) for DL and/or UL, the following three methods may be considered (refer to 3GPP TS 38.214).

    1. Resource allocation type 0 (Bitmap based allocation)
    2. Resource allocation type 1 (RIV based allocation)
    3. Resource allocation type 2 (Use of interlace)

Specifically, the frequency resource allocation for DL may be defined as shown in Tables 5, 6 and 7 below.

Further, the frequency resource allocation for UL may be defined as shown in Tables 8, 9 and 10 below.

[Table 5]

| 5.1.2.2 Resource allocation in frequency domain |
| --- |

(continued)

Two downlink resource allocation schemes, type 0 and type 1, are supported. The UE shall assume that when the scheduling grant is received with DCI format 1_0, 4_0 or 4_1 then downlink resource allocation type 1 is used.

If the scheduling DCI is configured to indicate the downlink resource allocation type as part of the *'Frequency domain resource assignment'* field by setting a higher layer parameter *resourceAllocation* in *PDSCH-Config* to 'dynamicSwitch', for DCI format 1_1 or setting a higher layer parameter *resourceAllocationDCI-1-2* in *PDSCH-Config* to 'dynamicSwitch' for DCI format 1_2 or setting a higher layer parameter *resourceAllocation* in *PDSCH-Config-Multicast* to 'dynamicSwitch' for DCI format 4_2,

the UE shall use downlink resource allocation type 0 or type 1 as defined by this DCI field. Otherwise the UE shall use the downlink frequency resource allocation type as defined by the higher layer parameter *resourceAllocation* in *PDSCH-Config* for DCI format 1_1 or by the higher layer parameter *resourceAllocationDCI-1-2* for DCI format 1_2 or by the higher layer parameter *resourceAllocation* in *PDSCH-Config Multicast* for DCI format 4_2.

If a bandwidth part indicator field is not configured in the scheduling DCI or the UE does not support active BWP change via DCI, the RB indexing for downlink type 0 and type 1 resource allocation is determined within the UE's active bandwidth part. If a bandwidth part indicator field is configured in the scheduling DCI and the UE supports active BWP change via DCI, the RB indexing for downlink type 0 and type 1 resource allocation is determined within the UE's bandwidth part indicated by bandwidth part indicator field value in the DCI. The UE shall upon detection of PDCCH intended for the UE determine first the downlink bandwidth part and then the resource allocation within the bandwidth part.

For a PDSCH scheduled with a DCI format 1_0 in any type of PDCCH common search space, regardless of which bandwidth part is the active bandwidth part, RB numbering starts from the lowest RB of the CORESET in which the DCI was received; otherwise RB numbering starts from the lowest RB in the determined downlink bandwidth part. When the PDCCH reception includes two PDCCH candidates from two respective search space sets, as described in clause 10.1 of [6, TS 38.213], for the purpose of determining the downlink RB set of a PDSCH when scheduled by DCI format 1_0, the CORESET with lower ID among two CORESETs associated with two PDCCH candidates is used.

Table 6 defines DL frequency resource allocation type 0.

[Table 6]

### **5.1.2.2.1 Downlink resource allocation type 0**

In downlink resource allocation of type 0, the resource block assignment information includes a bitmap indicating the Resource Block Groups (RBGs) that are allocated to the scheduled UE where a RBG is a set of consecutive virtual resource blocks defined by higher layer parameter *rbg-Size* configured by *PDSCH-Config* and the size of the bandwidth part as defined in Table 5.1.2.2.1-1.

**Table 5.1.2.2.1-1: Nominal RBG size *P***

| Bandwidth Part Size | Configuration 1 | Configuration 2 |
|---|---|---|
| 1 – 36 | 2 | 4 |
| 37 – 72 | 4 | 8 |
| 73 – 144 | 8 | 16 |
| 145 – 275 | 16 | 16 |

The total number of RBGs ($N_{\mathrm{RBG}}$) for a downlink bandwidth part $i$ of size $N_{\mathrm{BWP},i}^{size}$ PRBs is given by $N_{RBG} = \left\lceil \left( N_{BWP,i}^{size} + \left( N_{BWP,i}^{start} \bmod P \right) \right) / P \right\rceil$, where

- the size of the first RBG is $RBG_0^{size} = P - N_{BWP,i}^{start} \bmod P$,

- the size of last RBG is $RBG_{last}^{size} = \left( N_{BWP,i}^{start} + N_{BWP,i}^{size} \right) \bmod P$ if $\left( N_{BWP,i}^{start} + N_{BWP,i}^{size} \right) \bmod P > 0$ and $P$ otherwise,

- the size of all other RBGs is $P$.

In downlink resource allocation of type 0 scheduled using a DCI with CRC scrambled by G-RNTI or G-CS-RNTI, the resource block assignment information bitmap is calculated based on the description above with the following changes: the parameter $N_{BWP,i}^{start}$ is the starting PRB of the CFR, $N_{BWP,i}^{size}$ is the size of the common frequency resource (CFR) and the value of the higher layer parameter *rbg-Size* is configured by *PDSCH-Config-Multicast*.

The bitmap is of size $N_{\mathrm{RBG}}$ bits with one bitmap bit per RBG such that each RBG is addressable. The RBGs shall be indexed in the order of increasing frequency and starting at the lowest frequency of the bandwidth part. The order of RBG bitmap is such that RBG 0 to RBG $N_{RBG} - 1$ are mapped from MSB to LSB. The RBG is allocated to the UE if the corresponding bit value in the bitmap is 1, the RBG is not allocated to the UE otherwise.

Table 7 defines DL frequency resource allocation type 1.

[Table 7]

---

5.1.2.2.2 Downlink resource allocation type 1

In downlink resource allocation of type 1, the resource block assignment information indicates to a scheduled UE a set of contiguously allocated non-interleaved or interleaved virtual resource blocks within the active bandwidth part of size $N_{BWP}^{size}$ PRBs except for the case when DCI format 1_0 is decoded in any common search space in which case the size of CORESET 0 shall be used if CORESET 0 is configured for the cell and the size of initial DL bandwidth part shall be used if CORESET 0 is not configured for the cell.

A downlink type 1 resource allocation field consists of a resource indication value (RIV) corresponding to a starting virtual resource block ($RE_{start}$) and a length in terms of contiguously allocated resource blocks $L_{RBs}$. The resource indication value is defined by if $(L_{RBs} - 1) \leq \left\lfloor N_{BWP}^{size} / 2 \right\rfloor$ then

$RIV = N_{BWP}^{size} (L_{RBs} - 1) + RB_{start}$

else

---

(continued)

$$RIV = N_{BWP}^{size} (N_{BWP}^{size} - L_{RBs} + 1) + (N_{BWP}^{size} - 1 - RB_{start})$$

where $L'_{RBs} = L_{RBs}/K$, $RB'_{start} = RB_{start}/K$ and where $L'_{RBs}$ shall not exceed $N_{BWP}^{initial} - RB'_{start}$.

If $N_{BWP}^{active} > N_{BWP}^{initial}$, $K$ is the maximum value from set {1, 2, 4, 8} which satisfies $K \le \left\lfloor N_{BWP}^{active} / N_{BWP}^{initial} \right\rfloor$; otherwise $K = 1$.

In addition, the frequency resource allocation for UL may be defined as shown in Tables 8 and 9 below.

[Table 8]

6.1.2.2 Resource allocation in frequency domain

The UE shall determine the resource block assignment in frequency domain using the resource allocation field in the detected PDCCH DCI except for a PUSCH transmission scheduled by a RAR UL grant or fallbackRAR UL grant, in which case the frequency domain resource allocation is determined according to clause 8.3 of [6, 38.213] or a MsgA PUSCH transmission with frequency domain resource allocation determined according to clause 8.1A of [6, 38.213]. Three uplink resource allocation schemes type 0, type 1 and type 2 are supported. Uplink resource allocation scheme type 0 is supported for PUSCH only when transform precoding is disabled. Uplink resource allocation scheme type 1 and type 2 are supported for PUSCH for both cases when transform precoding is enabled or disabled.

If the scheduling DCI is configured to indicate the uplink resource allocation type as part of the '*Frequency domain resource*' assignment field by setting a higher layer parameter *resourceAllocation* in *pusch-Config* to 'dynamicSwitch', for DCI format 0_1 or setting a higher layer parameter *resourceAllocationDCI-0-2* in *pusch-Config* to 'dynamicSwitch' for DCI format 0_2, the UE shall use uplink resource allocation type 0 or type 1 as defined by this DCI field. Otherwise the UE shall use the uplink frequency resource allocation type as defined by the higher layer parameter *resourceAllocation* for DCI format 0_1 or the higher layer parameter *resourceAllocationDCI-0-2* for DCI format 0_2. The UE shall assume that when the scheduling PDCCH is received with DCI format 0_1 and *useInterlacePUCCH-PUSCH* in *BWP-UplinkDedicated* is configured, uplink type 2 resource allocation is used. The UE shall assume that when the scheduling PDCCH is received with DCI format 0_0, then uplink resource allocation type 1 is used, except when any of the higher layer parameters *useInterlacePUCCH-PUSCH* in *BWP-UplinkCommon* and *useInterlacePUCCH-PUSCH* in *BWP-UplinkDedicated* is configured in which case uplink resource allocation type 2 is used.

The UE expects that either none or both of *useInterlacePUCCH-PUSCH* in *BWP-UplinkCommon* and *useInterlacePUCCH-PUSCH* in *BWP-UplinkDedicated* is configured. If a bandwidth part indicator field is not configured in the scheduling DCI or the UE does not support active bandwidth part change via DCI, the RB indexing for uplink type 0, type 1 and type 2 resource allocation is determined within the UE's active bandwidth part. If a bandwidth part indicator field is configured in the scheduling DCI and the UE supports active bandwidh part change via DCI, the RB indexing for uplink type 0, type 1, type 2 resource allocation is determined within the UE's bandwidth part indicated by bandwidth part indicator field value in the DCI. The UE shall upon detection of PDCCH intended for the UE determine first the uplink bandwidth part and then the resource allocation within the bandwidth part. RB numbering starts from the lowest RB in the determined uplink bandwidth part.

[Table 9]

6.1.2.2.1        Uplink resource allocation type 0

In uplink resource allocation of type 0, the resource block assignment information includes a bitmap indicating the Resource Block Groups (RBGs) that are allocated to the scheduled UE where a RBG is a set of consecutive virtual resource blocks defined by higher layer parameter *rbg-Size* configured in *pusch-Config* and the size of the bandwidth part as defined in Table 6.1.2.2.1-1.

**Table 6.1.2.2.1-1: Nominal RBG size $P$**

| Bandwidth Part Size | Configuration 1 | Configuration 2 |
|---|---|---|
| 1 – 36 | *2* | 4 |
| 37 – 72 | 4 | 8 |
| 73 – 144 | 8 | 16 |
| 145 – 275 | 16 | 16 |

The total number of RBGs ($N_{RBG}$) for a uplink bandwidth part $i$ of size $N_{BWP,i}^{size}$ PRBs is given by $N_{RBG} = \left\lceil \left( N_{BWP,i}^{size} + \left( N_{BWP,i}^{start} \bmod P \right) \right) / P \right\rceil$ where

- the size of the first RBG is $RBG_0^{size} = P - N_{BWP,i}^{start} \bmod P$,

- the size of the last RBG is $RBG_{last}^{size} = \left( N_{BWP,i}^{start} + N_{BWP,i}^{size} \right) \bmod P$ if $\left( N_{BWP,i}^{start} + N_{BWP,i}^{size} \right) \bmod P > 0$ and $P$ otherwise.

- the size of all other RBG is $P$.

The bitmap is of size $N_{RBG}$ bits with one bitmap bit per RBG such that each RBG is addressable. The RBGs shall be indexed in the order of increasing frequency of the bandwidth part and starting at the lowest frequency. The order of RBG bitmap is such that RBG 0 to RBG $N_{RBG} - 1$ are mapped from MSB to LSB of the bitmap. The RBG is allocated to the UE if the corresponding bit value in the bitmap is 1, the RBG is not allocated to the UE otherwise.

In frequency range 1, only 'almost contiguous allocation' defined in [8, TS 38.101-1] is allowed as non-contiguous allocation per component carrier for UL RB allocation for CP-OFDM.

In frequency range 2, non-contiguous allocation per component carrier for UL RB allocation for CP-OFDM is not supported.

[Table 10]

6.1.2.2.2 Uplink resource allocation type 1

In uplink resource allocation of type 1, the resource block assignment information indicates to a scheduled UE a set of contiguously allocated non-interleaved virtual resource blocks within the active bandwidth part of size $N_{BWP}^{size}$ PRBs except for the case when DCI format 0_0 is decoded in any common search space in which case the size of the initial UL bandwidth part $N_{BWP,0}^{size}$ shall be used.

An uplink type 1 resource allocation field consists of a resource indication value (RIV) corresponding to a starting virtual resource block ($RB_{start}$) and a length in terms of contiguously allocated resource blocks $L_{RBs}$. The resource indication value is defined by

(continued)

if $(L_{RBs}-1) \le \lfloor N_{BWP}^{size}/2 \rfloor$ then

$$RIV = N_{BWP}^{size}(L_{RBs}-1) + RB_{start}$$

else

$$RIV = N_{BWP}^{size}(N_{BWP}^{size} - L_{RBs} + 1) + (N_{BWP}^{size} - 1 - RB_{start})$$

where $L_{RBs} \ge 1$ and shall not exceed $N_{BWP}^{size} - RB_{start}$.

When the DCI size for DCI format 0_0 in USS is derived from the initial UL BWP with size $N_{BWP}^{initial}$ but applied to another active BWP with size of $N_{BWP}^{active}$, an uplink type 1 resource block assignment field consists of a resource indication value (RIV) corresponding to a starting resource block $RB_{start} = 0, K, 2 \cdot K, \ldots, (N_{BWP}^{initial}-1) \cdot K$ and a length in terms of virtually contiguously allocated resource blocks $L_{RBs} = K, 2 \cdot K, \ldots, N_{BWP}^{initial} \cdot K$.

### Frequency domain resource mapping for Non-contiguous BWP configuration

A detailed description will be given below in relation to a case where a UE performs transmission in the full duplex radio (FDR) scenario of the gNB described above (i.e., the gNB performs transmission and reception in the same time slot).

The FDR operation of the gNB is performing transmission and reception at the same time, and may include a case where the transmission and reception frequencies are the same (i.e., SFFD) and a case where the transmission and reception frequencies are different but adjacent (i.e., SBFD). When the gNB performs the FDR operation, both downlink (DL) and uplink (UL) frequency resources for FDR operation may be allocated within a carrier (or BWP) for the same time resource. In this case, the UL resource may be positioned at the center of the carrier to suppress adjacent channel interference (ACI). In this case, for efficiency of resource allocation from the gNB perspective, the UE may be allocated non-contiguous or more flexible frequency resources. Accordingly, a BWP configuration method that allows for allocation of non-contiguous or more flexible frequency resources for a UE in the FDR scenario or the like of the gNB may be considered. Accordingly, the following describes in detail a method of allocating non-contiguous or more flexible frequency resources for the UE, assuming that a UL subband or UL frequency resources are positioned at the center of the carrier.

For the frequency domain resource allocation (FDRA) for DL and UL, as defined in Tables 5 to 10, the following three methods may be considered.

    1. Resource allocation type 0 (Bitmap based allocation)
    2. Resource allocation type 1 (RIV based allocation)
    3. Resource allocation type 2 (Use of interlace)

Among the aforementioned methods, methods 1 and 2 (downlink resource allocation type 0 and downlink resource allocation type 1: see 3GPP TS 38.214 subclause 5.1.2.2) may be used for the FDRA of PDSCH. For the FDRA of PUSCH, methods 1, 2, and 3 (uplink resource allocation type 0, uplink resource allocation type 1, and uplink resource allocation type 2: see 3GPP TS 38.214 subclause 6.1.2.2) may all be used. In the following description, it is assumed that when the UE receives a scheduling grant related to reception of a DL signal through DCI in DCI format 1_0, the DCI allocates frequency resources using downlink resource allocation type 1. For the UL, resource allocation type 0 may be applied only to the PUSCH when the transform precoding is disabled, while resource allocation type 1 and resource allocation type 2 may be applied for both the PUSCHs with the transform precoding enabled/disabled.

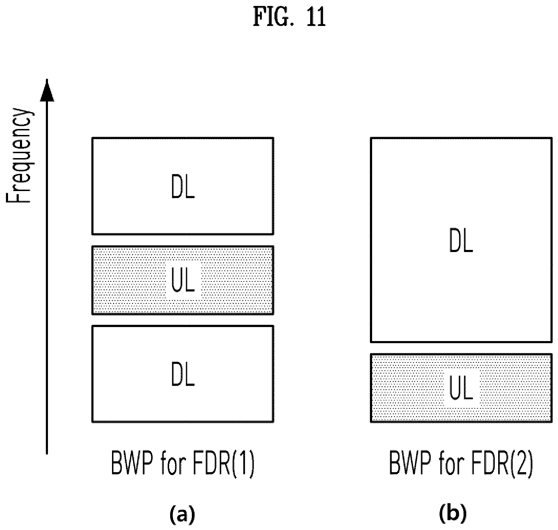

FIG. 11 is a diagram illustrating configuring an enhanced BWP for FDR operation of a base station.

Referring to FIG. 11-(a), in the case of BWP for FDR(1), the UL subband is positioned between (or in the center portion of) the DL subbands. Referring to FIG. 11-(b), in the case of BWP for FDR(2), the DL BWP and UL BWP may be arranged not to overlap with each other. In this case, in the BWP for FDR (1), the DL BWP needs to be configured for non-contiguous PRB resources. The DL/UL subband shown in FIG. 11 may be set for a specific time window during which the FDR operation of the gNB is performed.

In a predetermined scenario (3GPP specification), the DL BWP and UL BWP are defined to be composed of PRBs that are to be consecutive, and to have the same center frequency between the DL BWP and UL BWP linked to each other (DL BWP and UL BWP with the same bwp-Id). A new method for defining the BWPs or subbands shown in FIG. 11 in this predetermined scenario is described in detail.

As described above, when the UL BWP (or UL subband) is positioned in the center portion as shown in FIG. 11-(a), the DL BWP needs to be configured with non-contiguous PRB resources. On the other hand, when only one of the upper DL BW (bandwidth) or the lower DL BW is configured in FIG. 11-(a), or when the DL BWP and UL BWP are configured as shown in FIG. 11-(b), the DL BWP/UL BWP may be configured with contiguous PRBs as in the predetermined scenario described above. However, this may not satisfy the constraint that the DL BWP and UL BWP that are a BWP-pair in the predetermined scenario described above should have the same center frequency. The exclusion/change of the constraint that the same center frequency should be configured between the DL BWP and the UL BWP in the BWP-pair in the predetermined scenario may require significant configuration changes in the scenario. Therefore, changing the part where the DL BWP and UL BWP are configured with contiguous PRBs may minimize the changes in the above scenario.

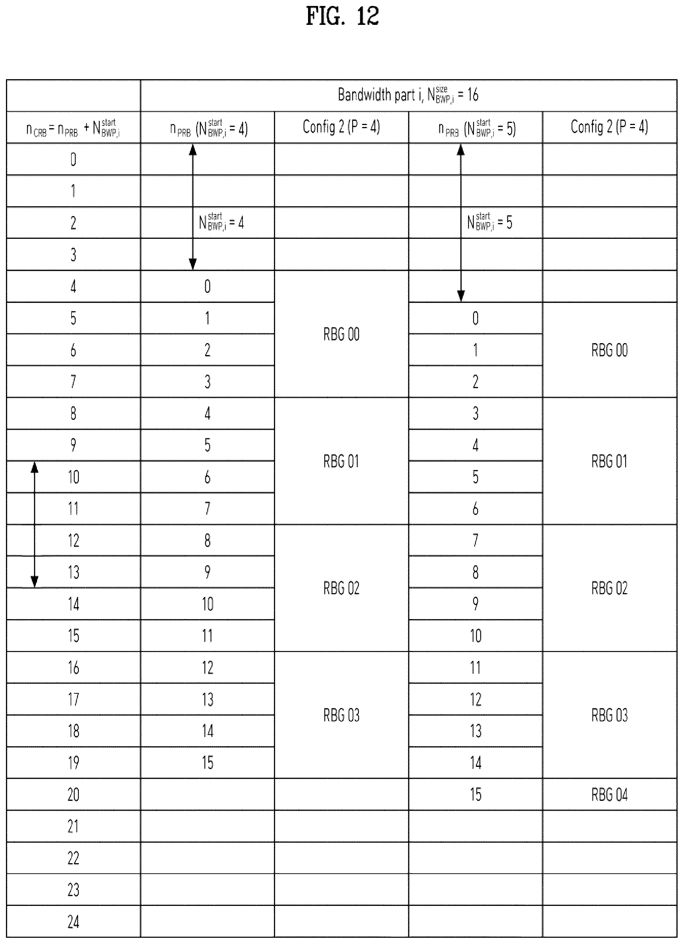

FIG. 12 illustrates a method of allocating frequency resources for UL BWP and DL BWP that are adjacent to each other.

Regarding allocation of non-contiguous frequency resources, if some frequency resources within the DL BWP are not available for the DL (or some frequency resources within the UL BWP are not available for the UL), the resource block group (RBG) grid for the DL may not be aligned with the RBG grid (or frequency resources) available for the DL within the DL BWP.

For example, referring to FIG. 12, as frequency domain resource allocation methods based on a conventional bitmap, the starting offset of the RBG set to 4 PRBs and the starting offset of the RBG set to 5 PRBs may be indicated. Here, in both cases, the RBG size may be 4 (P=4) and the BWP size may be 16. In this case, if the common resource blocks (CRBs) 10 to 13 are not used as DL BWPs or DL CRBs (for example, if they are set as UL BWPs or UL subbands), a part of RBG 01 and a part of RBG 02 within the DL BWP may not be available for receiving/transmitting DL signals.

In view of these issues, it may be considered to configure each RBG with only the RBs available for DL when the RBG grid and DL subband boundary are misaligned. Alternatively, if the RBG grid and UL subband boundaries are misaligned, configuring each RBG with only RBs available for UL may be considered.

Alternatively, the subband (or DL/UL BWP) may be configured such that the RBG grid and subband boundary are not misaligned. For example, the gNB may set the position of the subband and/or guard subband taking into account the RBG grid for the UE.

Since conventional frequency resource allocation is performed on an RBG basis as described above, a method of configuring at least one subband (or, DL/UL BWP) including non-contiguous frequency resources will be described in detail below, considering the RBG-based frequency resource allocation.

Here, the DL subband (or DL BWP) may be a subband that the gNB indicates to the UE. For the DL subband, no frequency resources for UL transmission may be expected to be allocated. The DL subband may be indicated to the UE using a cell-specific parameter or a group of UE specific parameter through RRC/MAC-CE/DCI or the like. For example, the gNB may indicate the DL subband to the UE through a system information block (SIB) or the like. Alternatively, to ensure the scheduling freedom of the gNB, the gNB may indicate a UE-specific DL subband to the UE using a UE-specific parameter (through RRC/MAC-CE/DCI). For the DL subband indicated in this way, the UE may expect/determine that no frequency resources for UL transmission will be allocated. For example, when the configured active UL BWP includes some frequency resources overlapping with the DL subband in units of RBs or REs, the UE may consider/determine that the overlapping frequency resources are excluded from the active UL BWP.

Similarly, a UL subband (or UL BWP) may be a subband indicated by the gNB to the UE, where no frequency resources are expected to be allocated for DL reception. The UL subband may be indicated to the UE using a cell-specific or group of UE specific parameter through RRC/MAC-CE/DCI or the like. For example, the gNB may indicate the UL subband to the UE through a system information block (SIB) or the like. Alternatively, to ensure the scheduling freedom of the gNB, the gNB may indicate a UE-specific UL subband to the UE using a UE-specific parameter (through RRC/MAC-CE/DCI). For the UL subband indicated in this way, the UE may expect/determine that no frequency resources for reception of DL signals will be allocated. For example, when the configured active DL BWP includes some frequency resources overlapping with the UL subband in units of RBs or REs, the UE may exclude the overlapping frequency resources from the active DL BWP.

Further, the UE may be allocated frequency resources for DL or UL in a unit of RBG or a unit of multiple RBs. Here, the unit of the frequency resource allocation may be the (minimum) unit in which the same precoding may be assumed, or the unit in which the same precoding is indicated to be performed. The RBG size (rbg-Size) may be a BWP-specific value in the configuration of the existing UE. According to the predetermined scenario (TS 38.331), the rbg-Size belongs to three information elements (IEs) ConfiguredGrantConfig, PDSCH-Config and PUSCH-Config, which may be dependent on BWP-UplinkDedicated, BWP-DownlinkDedicated and BWP-UplinkCommon, respectively.

As described above, the UE may determine that for the indicated/configured UL subband, no frequency resources overlapping with the UL subband have been allocated in the currently active DL BWP. Therefore, in order to minimize/prevent wastage of resources in terms of subsequent resource allocation, it is necessary to match the units of the frequency resource allocation with the (configuration) units of the UL subband. Similarly, the UE may determine that for the indicated/configured DL subband, no frequency resources overlapping with the DL subband are allocated in the currently active UL BWP. Therefore, in order to minimize/prevent waste of resources in terms of subsequent resource allocation, it is necessary to match the units of the frequency resource allocation with the (configuration) units of the DL subband. Several methods may be considered for matching the units of the frequency resource allocation with the (configuration) units of the subband.

Hereinafter, a detailed description will be given in relation to a method for matching the units of the frequency resource allocation and the (configuration) units of the subband on the assumption that an offset and the length of the BWP (or the size or width of the bandwidth) relative to a specific frequency resource are indicated, similar to the existing BWP configuration method.

## Configuring the subband to match the units of the frequency resource allocation with the units of the subband

Considering that the RBG grid is determined based on the position of CRB#0, the DL subband and/or UL subband may also be determined/configured based on the position of CRB#0. Alternatively, even without considering the RBG grid, the UL subband and/or UL subband (or, subbands) may be configured based on the CRB rather than the PRB, as the subband positions are not BWP specific. In this case, the bandwidth size and offset of the subband for configuration of the subband may be a multiple of the RBG size set for the UE. For example, the offset/size of the subband may be indicated only as a multiple of the minimum granularity N. In this regard, at least one of the following alternatives may be considered.

Furthermore, the offset/size for the subband may also be defined as a location/bandwidth for the subband.

### 1. Alt. 1

In Alt. 1, the UE may expect the network/base station/gNB (hereinafter referred to as the BS) to always set the offset/size of the subband so as not to be misaligned with the RBG grid.

In other words, the BS may indictate the offset/size of the subband to the UE without the constraint of the minimum granularity N, and the UE may expect that the subband configured according to the offset/size of the subband will always be aligned with the grid of the RBG for the BWP configured therefor. Alternatively, the BS may adjust the minimum granularity N, taking into account the RBG grid of the BWP for the UE. However, in this case, the BS may need to indicate the offset/size of the subband for each UE, taking into account the RGB size for each UE (as different RBG sizes may be set for the BWP for different UEs).

### 2. Alt. 2

The UE may determine the minimum granularity N of the offset/size of the subband based on the RBG size for the BWP, assuming that the size of the BWP is the system bandwidth (system BW). For example, the UE may determine that the minimum granularity N is equal to or a multiple of the RBG size. The system bandwidth may be set for the UE through the initial access (and/or SIB) to the BS.

This approach may be appropriate when the subband is configured using a cell-specific or group of UE-specific parameter. Further, the UE may assume the system bandwidth to be the BWP size. That is, the frequency position (i.e., the subband) at which the BS performs the FDR operation (e.g., SBFD, SFFD) may be set based on the system bandwidth, which is a cell-specific or a group of UE-specific parameter. In this case, the offset/size for setting the subband may be indicated based on the RBG size or a multiple of the RBG size derived from a parameter configured in dependence on the system bandwidth. For example, when the system bandwidth is configured for the UE, similar to the configuration of the BWP, the UE may determine the RBG size set in RRC parameters (e.g., ConfiguredGrantConfig, PDSCH-Config, PUSCH-Config, etc.), which is dependent on the configuration variable of the system band as the derived RBG size. For example, the UE may determine, as the minimum granularity N of the offset/size, the RBG size derived through the RRC parameters for determining the RBG size in dependence on the size of the system band. Alternatively, the offset/size for setting the subband may be indicated based on the RBG size that is the smallest unit in frequency in which the same precoding is assumed within the system bandwidth set for the UE, or a multiple of the RBG size. In other words, the UE may determine a first RBG size derived from the RRC parameters or a second RBG size, which is the smallest unit in frequency in which the same precoding is assumed within the system bandwidth configured for the UE, (or a multiple of the first RBG size or a multiple of the second RBG size) as the minimum granularity N of the offset/size for setting the subband.

Here, determining that the value of the minimum granularity N of the offset/size of the subband is equal to or a multiple of a specific RBG size may mean the following. When the value of the minimum granularity N of the offset/size of the subband is indicated, the UE may expect that the unit of the minimum granularity N will be indicated to be equal to the RBG size described above (e.g., the first RBG size or the second RBG size) or is a specific multiple of the RBG size described above.

For example, the RBG size based on the system bandwidth (e.g., the first RBG size or the second RBG size) may be indicated to be 2, the offset for the subband may be indicated to be 3, and the size (e.g., bandwidth size) may be indicated to be 4. In this case, the UE may determine the starting (frequency) position of the subband based on 6, which is the product of the RBG size and the offset, and determine 8, which is the product of the RBG size and the size, as the size or bandwidth of the subband. In other words, the UE may determine that the subband consists of 8 PRBs (CRB#6 to CRB#13), starting with CRB#6, which is the CRB after 6 PRBs (including CRB#5) based on CRB#0.

Alternatively, the BS may indicate to the UE multiplier information related to a multiple of the RBG size related to the minimum granularity N related to the subband offset/size. For example, the multiplier information may be indicated along with the subband offset/size. For example, the minimum granularity N of the subband offset/size or a specific parameter (e.g., granularity_subband) for the multiplier information to be applied to the minimum granularity N may be set/defined. The specific parameter may have a specific value (e.g., 1) as a default and may include settable values (multipliers). In this case, the UE may determine a multiplier to be applied to the RBG size based on the system bandwidth based on a specific value set in the specific parameter, and may determine the product of the determined multiplier and the RBG size as the minimum granularity N. If the specific value is not set in the specific parameter, the UE may determine that 1 is to be applied to the RBG size, which is based on the system bandwidth, as a default multiplier. The specific parameter may be indicated for each of the DL subband and the UL subband, or may be commonly applicable to the DL subband and the UL subband.

3. Alt. 3

The UE may always determine the value of the minimum granularity N for the size/offset of the subband to be equal to the RBG size for a specific BWP set or a multiple thereof.

The determination of the minimum granularity N according to case Alt. 3 may be applied in cases where the subband is UE-specifically set. For example, the frequency location (i.e., the subband) at which the BS performs FD operation (e.g., SBFD, SFFD) may be set based on UE-specific parameters, such as the form of the BWP, or configuration information adding a specific parameter to the existing BWP configuration, or may be set through reuse of the existing BWP configuration method. In this case, the minimum granularity N may be set to be equal to, or a multiple of, the size of the RBG derived in dependence on a specific BWP in the predetermined RRC parameters (e.g., the size of the RBG derived based on the specific BWP in the ConfiguredGrantConfig PDSCH-Config, PUSCH-Config, etc.), or the size of the RBG that is the smallest unit in frequency in which the same precoding may be assumed within a specific BWP set for the UE.

In the case where multiple BWPs are configured for the UE, the specific BWP may be determined as one of the BWPs by predetermination or pre-agreement. As methods for determining the specific BWP, the following options may be considered. However, the specific BWP may be determined among the multiple BWPs by a method different from the options described below.

- Option 1) A BWP with the greatest width among the DL and/or UL BWPs of the UE;
- Option 2) A BWP with the lowest index among the DL or UL BWPs of the UE;
- Option 3) An active BWP in a time resource when the BS is expected to perform SBFD operation;
- Option 4) A default/initial BWP set for the UE;
- Option 5) A BWP corresponding to a specific BWP ID number.

The specific BWP determined based on at least one of the options may be changed by the RRC/MAC-CE/DCI indication from the BS, or by predetermination or pre-agreement.

As described above, the value of the minimum granularity N of the size/offset for the subband may be equal to the RBG size of the specific BWP or a multiple of the RBG size of the specific BWP. The UE may expect that the RBG size of the specific BWP or a multiple of the RBG size of the specific BWP will be indicated as the value of the minimum granularity N. In this case, the UE may determine the start (frequency) position of the subband based on the product of the RBG size and the offset, which is 6, and determine the product of the RBG size and the size, which is 8, as the size or bandwidth of the subband. That is, the UE may determine that the subband consists of 8 PRBs (CRB#6 to CRB#13), starting with CRB#6, which is the CRB after 6 PRBs (including CRB#5) based on CRB#0..

Alternatively, the BS may indicate to the UE multiplier information related to a multiple of the RBG size related to the minimum granularity N related to the subband offset/size. For example, the multiplier information may be indicated along with the subband offset/size. For example, the minimum granularity N of the subband offset/size or a specific parameter (e.g., granularity_subband) for the multiplier information to be applied to the minimum granularity N may be set. The specific parameter may have a specific value (e.g., 1) as a default and may include configurable values (multipliers). In this case, the UE may determine a multiplier to be applied to the RBG size based on the system bandwidth based on a specific value set in the specific parameter, and may determine the product of the determined multiplier and the RBG size as the minimum granularity N. In this case, if the specific BWP indicating the RBG size is changed, the UE may set/reset the subband by applying the RBG size of the changed specific BWP to the offset/size of the same indicated subband.

The subband configuration method described above may be applied for both DL subband and UL subband configurations. In this case, a guard subband may be included between the DL subband and the UL subband. In this case, the DL subband and the UL subband may be configured with the guard subband taken into account. Alternatively, configuration information related to the guard subband may be provided with the configuration information related to the DL subband and the UL subband based on the methods listed in the alternatives above.

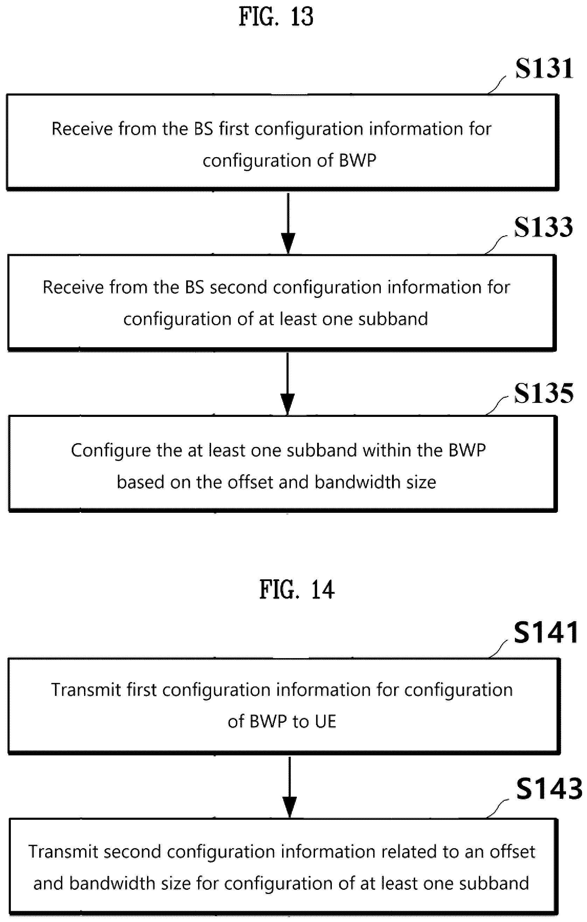

FIG. 13 illustrates a method of configuring at least one subband by a UE.

Referring to FIG. 13, the UE may receive from the BS first configuration information for configuration of a BWP (S131). The first configuration information may include information for configuration of a DL BWP for downlink and/or information for configuration of a UL BWP for uplink. For example, the first configuration information may include information related to an offset and bandwidth size for configuration of the DL BWP and/or UL BWP, and the UE may configure the DL BWP and/or UL BWP based on the offset and bandwidth included in the first configuration information. For example, the UE may configure a DL BWP and/or UL BWP composed of contiguous PRBs having the bandwidth size from a CRB after the offset based on CRB#0.

Next, the UE may receive from the BS second configuration information for configuration of at least one subband within the BWP (S133). Similarly to the first configuration information, the second configuration information may include information related to an offset and bandwidth size for configuration of the at least one subband. The second configuration information may be transmitted through RRC signaling or PDCCH (or DCI).

Next, the UE may configure the at least one subband within the BWP based on the offset and bandwidth size (S135). As described above, the UE may configure the at least one subband by applying a specific granularity (or a minimum granularity N) to the offset and bandwidth size. For example, the UE may configure the at least one subband based on the offset multiplied by the specific granularity and the bandwidth size multiplied by the specific granularity. Here, the specific granularity may be set/determined to a value such that the boundaries of the at least one subband may align/match with a RBG grid configured in the BWP as described with reference to FIGS. 9 to 12. For example, the specific granularity may be determined/set as an RBG size or a multiple of the RBG size determined based on the system bandwidth.

Specifically, the UE may determine the specific granularity based on the system bandwidth configured by the BS (see Alt.2). For example, the UE may determine the specific granularity using an RGB size determined in dependence on the size of the system bandwidth in the RRC parameters (ConfiguredGrantConfig, PDSCH-Config, PUSCH-Config). For example, an RBG size (hereinafter, the first RBG size) may be determined/set based on the system bandwidth in the RRC parameters, and the UE may determine the specific granularity based on the first RBG size. For example, the UE may determine the first RBG size or a specific multiple of the first RBG size as the specific granularity, and may apply the determined specific granularity to the offset and bandwidth size to configure the at least one subband. For example, when the first RBG size determined in dependence on the size of the system bandwidth in the RRC parameter of PDSCH-Config is 2, the UE may determine 2, which is the first RBG size, as the size of the specific granularity. In this case, when the offset indicated in the second configuration information is 2 and the bandwidth size is 4, the UE may determine 4, which is obtained by multiplying the offset, 2 by the specific granularity, 2, as the offset for determining the start point of the at least one subband, and may determine 8, which is obtained by multiplying the bandwidth size, 4 by the specific granularity, 2, as the bandwidth size of the at least one subband. In this case, the UE may configure the at least one subband including 8 contiguous PRBs starting with the PRB (i.e., CRB#4) after 4 PRBs based on CRB#0 (the CRB with index 0).

Alternatively, the UE may determine the minimum unit of RBG size (hereinafter, a second RBG size) in which the same precoding is applicable in the system bandwidth. The UE may determine the second RBG size or a specific multiple of the second RBG size as the specific granularity. For example, when the same precoding is applicable for an RBG composed of at least 3 RBs in the system bandwidth, the UE may determine the second RBG size equal to 3 as the size of the specific granularity. In this case, when the offset indicated through the second configuration information is 2 and the bandwidth size is 4, the UE may determine 6, which is obtained by multiplying the offset, 2 by the specific granularity, 3, as an offset for determining the start point of the at least one subband, and determine 12, which is obtained by multiplying the bandwidth size, 4 by the specific granularity, 3, as the bandwidth size of the at least one subband. In this case, the UE may configure the at least one subband including 12 contiguous PRBs starting with the PRB (i.e., CRB#6) after 6 PRBs based on CRB#0 (the CRB with index 0).

Alternatively, as described above, the UE may be configured with/receive multiplier information (e.g., granularity_subband) related to the specific granularity through the second configuration information. In this case, based on the integer M included in the multiplier information, the UE may determine the specific granularity as a multiple of M of the first RBG size, or as a multiple of M of the second RBG size. If the multiplier information is not included in the second configuration information, the UE may determine the specific granularity based on a default value (e.g., 1). For example, if the multiplier information is not included in the second configuration information, the UE may determine the specific granularity as the first RBG size or the second RBG size.

As such, since the specific granularity is determined based on the first RGB size and the second RBG size, the UE may further apply the offset and the bandwidth size to the specific granularity to configure the at least one subband in which the grid of RBGs and the boundary configured for the BWP match/align with each other.

Alternatively, the at least one subband may be configure only for a specific time interval. As described above, the specific time interval may correspond to the time interval during which the BS performs the FDR operation. The UE may receive indication of the information related to the specific time from the BS through the RRC/DCI/MAC CE. In this case, the UE may configure the at least one subband within the BWP for the specific time interval based on the second configuration information. For example, when the specific time interval is a TDD time interval for reception of the downlink signal, the UE may configure the at least one subband within the DL BWP based on the second configuration information. Here, the at least one subband may be a UL subband for transmission of the uplink signal. In this case, the UE may determine that the remaining portions of the DL BWP other than the UL subband are designated as DL subbands. Alternatively, the at least one subband may be the DL subband and the UL subband within the DL BWP. As described above, the UE may only perform DL reception operation in the DL subband or UL reception operation in the UL subband, unlike the BS, even though the DL subband and the UL subband are configured for the specific time interval. In other words, the UE may only perform half-duplex operation, even though the FDR operation of the BS may be performed in the specific time interval.

Alternatively, the UE may specify the RBG size for determination of the specific granularity depending on the type of signal in which the second configuration information is carried. For example, when the second configuration information is indicated in a cell-specific or group of UE-specific parameter, the UE may determine the RBG size using the system bandwidth based on Alt.2. Alternatively, when the second configuration information is indicated in the UE-specific parameter, the UE may determine the RBG size for determination of the specific granularity by taking into account the size of the specific BWP configured for the UE based on Alt.3.

FIG. 14 illustrates a method of configuring at least one subband for a UE by a BS.

Referring to FIG. 14, the BS may transmit first configuration information configuring a bandwidth part (BWP) to the UE (S141). Next, the BS may transmit to the UE second configuration information related to an offset and bandwidth size for configuration of at least one subband within the BWP (S143). In this case, the BS may expect that the at least one subband will be configured for the UE by applying a specific granularity to the offset and bandwidth size included in the second configuration information, rather than applying the offset and bandwidth size as they are. For example, the BS may expect/determine that the start position of the at least one subband will be determined based on the offset multiplied by the specific granularity, and the bandwidth size of the at least one subband will be determined based on the bandwidth size multiplied by the specific granularity. The specific granularity may be set/determined to be a value such that the grid of RBGs configured in the BWP and the boundary of the at least one subband may be aligned/matched, as described with reference to FIGS. 9 to 13. For example, the specific granularity may be determined/set as an RBG size or a multiple of the RBG size determined based on the system bandwidth.

As the at least one subband is configured by further considering the specific granularity according to the RBG size determined based on the system bandwidth, the boundary of the at least one subband and the RBG grid configured for the BWP may be easily aligned with each other. Alternatively, the frequency resource allocation in the RBG units for the BWP and/or the at least one subband may minimize/prevent generation of unused frequency resources. Alternatively, the matching of the units of the frequency resource allocation according to the specific granularity with the (configuration) units of the subband may minimize/prevent wastage of resources in terms of subsequent resource allocation. Furthermore, since the specific granularity is determined directly by the UE based on the system bandwidth, the BS may transmit configuration information for configuration of the at least one subband without taking into account the RBG size set per UE. In this case, the BS may align the RBG grid for the BWP with the at least one subband without having to determine a different offset and bandwidth size for each UE with a different RBG size.

## Communication system example to which the present disclosure is applied

Although not limited thereto, various descriptions, functions, procedures, proposals, methods, and/or operational flow charts of the present disclosure disclosed in this document may be applied to various fields requiring wireless communication/connection (5G) between devices.

Hereinafter, it will be illustrated in more detail with reference to the drawings. In the following drawings/description, the same reference numerals may exemplify the same or corresponding hardware blocks, software blocks, or functional blocks, unless otherwise indicated.

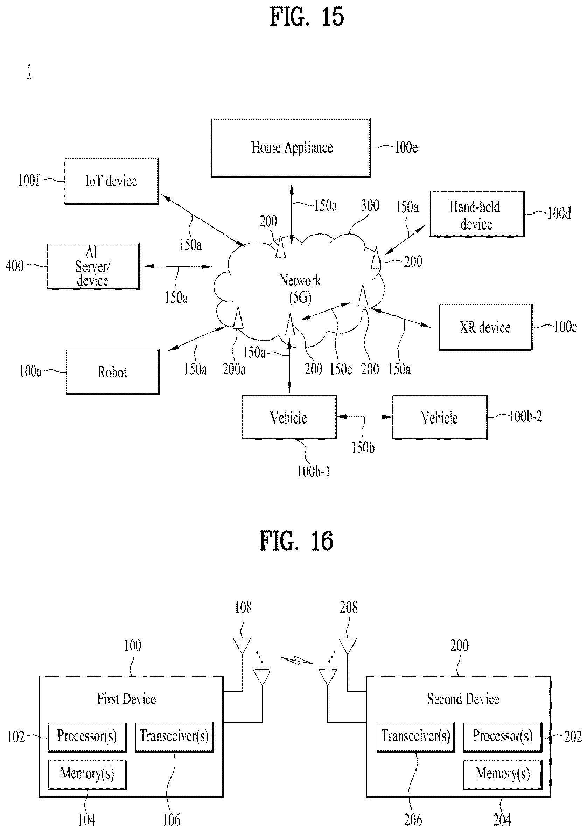

FIG. 15 illustrates a communication system applied to the present disclosure.

Referring to FIG. 15, a communication system 1 applied to the present disclosure includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous driving vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g., Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/DL communication 150a, sidelink communication 150b (or, D2D communication), or inter BS communication (e.g., relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

## Examples of wireless devices to which the present disclosure is applied

FIG. 16 illustrates a wireless device applicable to the present disclosure.

Referring to FIG. 16, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 15.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information acquired by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

According to one embodiment, the first wireless device 100 or UE may include a processor 102 connected to an RF transceiver and a memory 104. The memory 104 may include at least one program capable of performing operations related to the embodiments described with reference to FIGS. 9 to 14.

Specifically, the processor 102 may control the RF transceiver 106 to receive, from the BS, first configuration information configuring a bandwidth part (BWP), receive, from the BS, second configuration information from the BS, the second configuration information including information on an offset and bandwidth size for configuration of at least one subband within the BWP, and configure the at least one subband based on the second configuration information. The at least one subband may be configured based on a specific granularity determined based on the offset, the bandwidth size, and a size of a system bandwidth.

Alternatively, the processor 102 and memory 104 may be a processing device that controls a UE that communicates with a BS. In this case, the processing device may include at least one processor, and at least one memory connected to the at least one processor and storing instructions. The instructions may cause, when executed by the at least one processor, the UE to receive, from the BS, first configuration information configuring a bandwidth part (BWP), receive, from the BS, second configuration information from the BS, the second configuration information including information on an offset and bandwidth size for configuration of at least one subband within the BWP, and configure the at least one subband based on the second configuration information. The at least one subband may be configured based on a specific granularity determined based on the offset, the bandwidth size, and a size of a system bandwidth.

Alternatively, a non-transitory computer-readable storage medium may be configured on which instructions for performing the proposed methods described with reference to FIGS. 9 to 14 are recorded.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information acquired by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

According to an embodiment, the base station or network may include the processor 202, the memory 204, and/or the transceiver 206. The processor 202 may control the transceiver 206 or RF transceiver to transmit, to the UE, first configuration information configuring a bandwidth part (BWP), and transmit second configuration information to the UE, the second configuration information comprising information on an offset and bandwidth size for configuration of at least one subband within the BWP. The at least one subband may be configured based on a specific granularity determined based on the offset, the bandwidth size, and a size of a system bandwidth.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

## Examples of application of wireless devices to which the present disclosure is applied

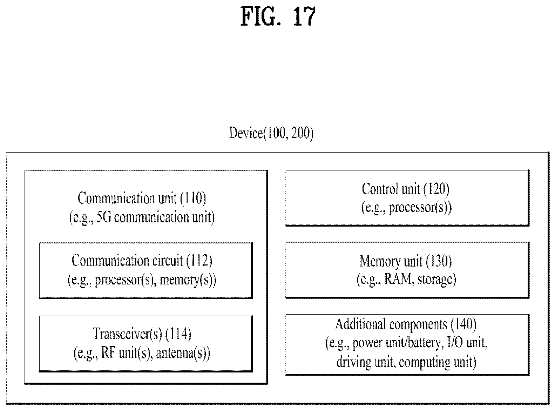

FIG. 17 illustrates another example of a wireless device applied to the present disclosure.

Referring to FIG. 17, wireless devices 100 and 200 may correspond to the wireless devices 100 and 200 of FIG. 16 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 16. For example, the transceiver(s) 114 may include the one or more transceivers 106 and 206 and/or the one or more antennas 108 and 208 of FIG. 16. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 15), the vehicles (100b-1 and 100b-2 of FIG. 15), the XR device (100c of FIG. 15), the hand-held device (100d of FIG. 15), the home appliance (100e of FIG. 15), the IoT device (100f of FIG. 15), a digital broadcast UE, a hologram device, a public safety device, an MTC device, a medicine device, a fintech device (or a finance device), a security device, a climate/environment device, the AI server/device (400 of FIG. 15), the BSs (200 of FIG. 15), a network node, etc. The wireless device may be used in a mobile or fixed place according to a use-example/service.

In FIG. 17, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

Here, wireless communication technologies implemented in the wireless devices (XXX, YYY) of the present specification may include LTE, NR, and 6G, as well as Narrowband Internet of Things for low power communication. At this time, for example, the NB-IoT technology may be an example of a Low Power Wide Area Network (LPWAN) technology, and may be implemented in standards such as LTE Cat NB1 and/or LTE Cat NB2, and is not limited to the above-described names. Additionally or alternatively, the wireless communication technology implemented in the wireless devices (XXX, YYY) of the present specification may perform communication based on LTE-M technology. In this case, as an example, the LTE-M technology may be an example of LPWAN technology, and may be referred to by various names such as eMTC (enhanced machine type communication). For example, LTE-M technology may be implemented in at least one of a variety of standards, such as 1) LTE CAT 0, 2) LTE Cat M1, 3) LTE Cat M2, 4) LTE non-BL (non-Bandwidth Limited), 5) LTE-MTC, 6) LTE Machine Type Communication, and/or 7) LTE M, and is not limited to the above-described names. Additionally or alternatively, the wireless communication technology implemented in the wireless devices (XXX, YYY) of the present specification is at least one of ZigBee, Bluetooth, and Low Power Wide Area Network (LPWAN) considering low power communication, and is not limited to the above-described names. As an example, ZigBee technology may generate personal area networks (PANs) related to small/low-power digital communication based on various standards such as IEEE 802.15.4, and may be called various names.

The embodiments described above are those in which components and features of the present disclosure are combined in a predetermined form. Each component or feature should be considered optional unless explicitly stated otherwise. Each component or feature may be implemented in a form that is not combined with other components or features. In addition, it is also possible to constitute an embodiment of the present disclosure by combining some components and/or features. The order of operations described in the embodiments of the present disclosure may be changed. Some configurations or features of one embodiment may be included in other embodiments, or may be replaced with corresponding configurations or features of other embodiments. It is obvious that the embodiments may be configured by combining claims that do not have an explicit citation relationship in the claims or may be included as new claims by amendment after filing.

In this document, embodiments of the present disclosure have been mainly described based on a signal transmission/reception relationship between a UE and a base station. Such a transmission/reception relationship is extended in the same/similar manner to signal transmission/reception between a UE and a relay or a base station and a relay. A specific operation described as being performed by a base station in this document may be performed by its upper node in some cases. That is, it is obvious that various operations performed for communication with a UE in a network comprising a plurality of network nodes including a base station may be performed by the base station or network nodes other than the base station. The base station may be replaced by terms such as a fixed station, a Node B, an eNode B (eNB), an access point, and the like. In addition, the UE may be replaced with terms such as User Equipment (UE), Mobile Station (MS), Mobile Subscriber Station (MSS).

In a hardware configuration, the embodiments of the present disclosure may be achieved by one or more application specific integrated circuits (ASICs), digital signal processors (DSPs), digital signal processing devices (DSPDs), programmable logic devices (PLDs), field programmable gate arrays (FPGAs), processors, controllers, microcontrollers, microprocessors, etc.

In a firmware or software configuration, a method according to embodiments of the present disclosure may be implemented in the form of a module, a procedure, a function, etc. Software code may be stored in a memory unit and executed by a processor. The memory unit is located at the interior or exterior of the processor and may transmit and receive data to and from the processor via various known means

As described before, a detailed description has been given of preferred embodiments of the present disclosure so that those skilled in the art may implement and perform the present disclosure. While reference has been made above to the preferred embodiments of the present disclosure, those skilled in the art will understand that various modifications and alterations may be made to the present disclosure within the scope of the present disclosure.

[Industrial Applicability]

Embodiments of the present disclosure as described above may be applied to various mobile communication systems.

**Claims**

1. A method of communicating with a base station by a user equipment (UE) in a wireless communication system, the method comprising:

   receiving, from the base station, first configuration information configuring a bandwidth part (BWP);
   receiving, from the base station, second configuration information including information on an offset and bandwidth size for configuring at least one subband; and
   configuring the at least one subband within the BWP based on the second configuration information,
   wherein the at least one subband is configured based on a specific granularity determined based on the offset, the bandwidth size, and a size of a system bandwidth.

2. The method of claim 1, wherein a boundary of the at least one subband is aligned with a grid of a resource block group (RBG) configured for the BWP based on the offset, the bandwidth size, and the specific granularity.

3. The method of claim 1, wherein the specific granularity is determined as a resource block group (RBG) size or as a multiple of the RBG size, the RBG size being determined based on the size of the system bandwidth.

4. The method of claim 1, wherein the specific granularity is determined as a minimum resource block group (RBG) size allowing same precoding to be applied within the system bandwidth or as a multiple of the minimum RBG size.

5. The method of claim 3, wherein the second configuration information further comprises indication information indicating M (where M is an integer) related to the specific granularity,
   wherein the specific granularity is determined as a value obtained by multiplying M by the RBG size determined based on the size of the system bandwidth.

6. The method of claim 1, wherein a start position of the at least one subband is determined based on a value obtained by multiplying the offset by the specific granularity,
   wherein a size of the at least one subband is determined based on a value obtained by multiplying the bandwidth size by the specific granularity.

7. The method of claim 1, wherein the at least one subband is configured only for a specific time interval for full-duplex operation of the base station.

8. The method of claim 7, wherein the at least one subband comprises at least one of a first subband for downlink or a second subband for uplink.

9. The method of claim 1, wherein the UE determines that the BWP is configured only with remaining frequency resources among a plurality of frequency resources configured for the BWP for the specific time interval, excluding at least one frequency resource overlapping with the at least one subband.

10. The method of claim 1, wherein the second configuration information is a radio resource control (RRC) parameter for a cell-specific or UE-specific group.

11. A non-transitory computer-readable storage medium having recorded thereon instructions for performing the method of claim 1.

12. A user equipment (UE) for communicating with a base station in a wireless communication system, comprising:

    a radio frequency (RF) transceiver; and
    a processor connected to the RF transceiver,
    wherein the processor controls the RF transceiver to perform operations comprising:

    receiving, from the base station, first configuration information configuring a bandwidth part (BWP);
    receiving, from the base station, second configuration information including information on an offset and bandwidth size for configuring at least one subband within the BWP; and
    configuring the at least one subband based on the second configuration information,
    wherein the at least one subband is configured based on a specific granularity determined based on the offset, the bandwidth size, and a size of a system bandwidth.

13. A processing device for controlling a user equipment (UE) in a wireless communication system, comprising:

at least one processor; and
at least one memory connected to the at least one processor and storing instructions, the instructions causing, when executed by the at least one processor, the UE to perform operations comprising:

receiving, from the base station, first configuration information configuring a bandwidth part (BWP);
receiving, from the base station, second configuration information including information on an offset and bandwidth size for configuring at least one subband within the BWP; and
configuring the at least one subband based on the second configuration information,
wherein the at least one subband is configured based on a specific granularity determined based on the offset, the bandwidth size, and a size of a system bandwidth.

14. A method of communicating with a user equipment (UE) by a base station in a wireless communication system, the method comprising:

transmitting, to the UE, first configuration information configuring a bandwidth part (BWP); and
transmitting, to the UE, second configuration information including information on an offset and bandwidth size for configuring at least one subband within the BWP,
wherein the at least one subband is configured based on a specific granularity determined based on the offset, the bandwidth size, and a size of a system bandwidth.

15. A base station for communicating with a UE in a wireless communication system, comprising:

a radio frequency (RF) transceiver; and
a processor connected to the RF transceiver,
wherein the processor controls the RF transceiver to perform operations comprising:

transmitting, to the UE, first configuration information configuring a bandwidth part (BWP); and
transmitting, to the UE, second configuration information including information on an offset and bandwidth size for configuring at least one subband within the BWP,
wherein the at least one subband is configured based on a specific granularity determined based on the offset, the bandwidth size, and a size of a system bandwidth.

# FIG. 1

# FIG. 2

# FIG. 3

| · · · | One Frame (10ms) | · · · |
|---|---|---|

| · · · | Half-Frame (5ms) | Half-Frame (5ms) | · · · |
|---|---|---|---|

| · · · | Subframe 0 (1ms) | · · · | Subframe 4 (1ms) | Subframe 5 (1ms) | · · · | Subframe 9 (1ms) | · · · |
|---|---|---|---|---|---|---|---|

Subframe (1ms)

| 15KHz | Slot 0 (14symbols) |
|---|---|

1ms

| 30KHz | Slot 0 (14symbols) | Slot 1 |
|---|---|---|

500us

| 60KHz | Slot 0 (14symbols) | Slot 1 | Slot 2 | Slot 3 |
|---|---|---|---|---|

250us

| 120KHz | Slot 0 (14symbols) | Slot 1 | Slot 2 | Slot 3 | Slot 4 | Slot 5 | Slot 6 | Slot 7 |
|---|---|---|---|---|---|---|---|---|

125us

# FIG. 4

# FIG. 5

System Information

Initial Cell Search | Reception | Random Access Procedure | General DL/UL Tx/Rx

S18

| P/S - SCH & [DLRS] & PBCH | PDCCH/ PDSCH (BCCH) | PRACH | PDCCH/ PDSCH | PRACH | PDCCH/ PDSCH | PDCCH/ PDSCH | PUSCH/ PUCCH |

S11 · S12 · S13 · S14 · S15 · S16 · S17

· DL/UL ACK/NACK
· UE CQI/PMI/Rank Report using PUSCH and PUCCH

# FIG. 6

DL assingment-to-PDSCH offset (K0)

PDCCH

PUSCH

PUCCH

PDSCH-to-HARQ-ACK reporting offset (K1)

UL grant-to-PUSCH offset (K2)

PDCCH

PUSCH

# FIG. 7

| UE | | BS |
|---|---|---|

CSI Related Configuration
Information (710)

RS(e.g., CSI-RS) (720)

CSI Calculation (730)

CSI Report (740)

## FIG. 8

Carrier #0
Subband-wise Full Duplex

(a)

Carrier #0
Spectrum-Sharing Full Duplex

(b)

## FIG. 9

| HD | SBFD | SBFD | SBFD | HD |

(a)

| HD | SFFD | SFFD | SFFD | HD |

(b)

# FIG. 10

(a)

(b)

FIG. 11

BWP for FDR(1)

(a)

BWP for FDR(2)

(b)

# FIG. 12

| $n_{CRB} = n_{PRB} + N_{BWP,i}^{start}$ | $n_{PRB}$ ($N_{BWP,i}^{start} = 4$) | Config 2 (P = 4) | $n_{PRB}$ ($N_{BWP,i}^{start} = 5$) | Config 2 (P = 4) |
|---|---|---|---|---|
| Bandwidth part i, $N_{BWP,i}^{size} = 16$ | | | | |
| 0 | | | | |
| 1 | | | | |
| 2 | $N_{BWP,i}^{start} = 4$ | | $N_{BWP,i}^{start} = 5$ | |
| 3 | | | | |
| 4 | 0 | | | |
| 5 | 1 | RBG 00 | 0 | |
| 6 | 2 | | 1 | RBG 00 |
| 7 | 3 | | 2 | |
| 8 | 4 | | 3 | |
| 9 | 5 | RBG 01 | 4 | |
| 10 | 6 | | 5 | RBG 01 |
| 11 | 7 | | 6 | |
| 12 | 8 | | 7 | |
| 13 | 9 | RBG 02 | 8 | |
| 14 | 10 | | 9 | RBG 02 |
| 15 | 11 | | 10 | |
| 16 | 12 | | 11 | |
| 17 | 13 | RBG 03 | 12 | |
| 18 | 14 | | 13 | RBG 03 |
| 19 | 15 | | 14 | |
| 20 | | | 15 | RBG 04 |
| 21 | | | | |
| 22 | | | | |
| 23 | | | | |
| 24 | | | | |

## FIG. 13

S131

Receive from the BS first configuration information for configuration of BWP

S133

Receive from the BS second configuration information for configuration of at least one subband

S135

Configure the at least one subband within the BWP based on the offset and bandwidth size

## FIG. 14

S141

Transmit first configuration information for configuration of BWP to UE

S143

Transmit second configuration information related to an offset and bandwidth size for configuration of at least one subband

# FIG. 15

1

# FIG. 16

# FIG. 17

Device(100, 200)

Communication unit (110)
(e.g., 5G communication unit)

Communication circuit (112)
(e.g., processor(s), memory(s))

Transceiver(s) (114)
(e.g., RF unit(s), antenna(s))

Control unit (120)
(e.g., processor(s))

Memory unit (130)
(e.g., RAM, storage)

Additional components (140)
(e.g., power unit/battery, I/O unit,
driving unit, computing unit)

## INTERNATIONAL SEARCH REPORT

International application No.

**PCT/KR2023/015166**

| A. | CLASSIFICATION OF SUBJECT MATTER |
| --- | --- |

**H04W 72/04**(2009.01)i; **H04W 72/23**(2023.01)i; **H04W 72/53**(2023.01)i; **H04L 5/14**(2006.01)i; **H04L 5/00**(2006.01)i

According to International Patent Classification (IPC) or to both national classification and IPC

| B. | FIELDS SEARCHED |
| --- | --- |

Minimum documentation searched (classification system followed by classification symbols)

H04W 72/04(2009.01); H04L 5/00(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: BWP, subband, offset, bandwidth size, system bandwidth, 입도(granularity), RBG, grid, align, precoding, full-duplex, DL subband, UL subband, overlap, RRC

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | US 2020-0154415 A1 (SAMSUNG ELECTRONICS CO., LTD.) 14 May 2020 (2020-05-14)<br>See paragraphs [0105]-[0275]; and claims 1-3. | 1,3,7-15 |
| A | | 2,4-6 |
| Y | TCL. Discussion on subband non-overlapping full duplex. R1-2205834, 3GPP TSG RAN WG1 Meeting #110-e. Toulouse, France. 12 August 2022.<br>See pages 1-4; and figure 1. | 1,3,7-15 |
| A | SPREADTRUM COMMUNICATIONS. Discussion on subband non-overlapping full duplex. R1-2205989, 3GPP TSG RAN WG1 #110. Toulouse, France. 12 August 2022.<br>See sections 2-2.5. | 1-15 |
| A | MODERATOR (CATT). Summary #1 of subband non-overlapping full duplex. R1-2207805, 3GPP TSG RAN WG1 #110. Toulouse, France. 28 August 2022.<br>See pages 1-69. | 1-15 |
| A | US 2021-0377938 A1 (QUALCOMM INCORPORATED) 02 December 2021 (2021-12-02)<br>See paragraphs [0093]-[0166]. | 1-15 |

☐ Further documents are listed in the continuation of Box C.  ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **25 January 2024** | **25 January 2024** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2023/015166**

| Patent document cited in search report | | | Publication date (day/month/year) | Patent family member(s) | | | Publication date (day/month/year) |
|---|---|---|---|---|---|---|---|
| US | 2020-0154415 | A1 | 14 May 2020 | CN | 113039858 | A | 25 June 2021 |
| | | | | EP | 3861823 | A1 | 11 August 2021 |
| | | | | JP | 2022-506704 | A | 17 January 2022 |
| | | | | KR | 10-2020-0054068 | A | 19 May 2020 |
| | | | | US | 11219008 | B2 | 04 January 2022 |
| | | | | US | 2022-0408416 | A1 | 22 December 2022 |
| | | | | WO | 2020-096434 | A1 | 14 May 2020 |
| US | 2021-0377938 | A1 | 02 December 2021 | CN | 115398850 | A | 25 November 2022 |
| | | | | EP | 4158834 | A1 | 05 April 2023 |
| | | | | TW | 202147902 | A | 16 December 2021 |
| | | | | WO | 2021-242931 | A1 | 02 December 2021 |

Form PCT/ISA/210 (patent family annex) (July 2022)